# EUROPEAN PATENT APPLICATION

(11) **EP 4 749 530 A1**
(43) Date of publication of application: **27.05.2026**
(21) Application number: 24855207.7
(22) Date of filing: 01.02.2024
(51) Int. Cl.: G06N 3/082

(54) **NETWORK MODEL TRAINING METHOD, CLOUD PLATFORM AND RELATED APPARATUS**

(30) Priority: 22.08.2023 CN 202311061555; 25.10.2023 CN 202311393706
(71) Applicant: Huawei Cloud Computing Technologies Co., Ltd., Gui'an New District, Guizhou 550025 (CN)
(72) Inventor: LI, Zechang, Guiyang, Guizhou 550025 (CN); XIA, Qingrong, Guiyang, Guizhou 550025 (CN); YE, Zi, Guiyang, Guizhou 550025 (CN); DUAN, Xinyu, Guiyang, Guizhou 550025 (CN); WANG, Zhefeng, Guiyang, Guizhou 550025 (CN); GU, Zhenyu, Guiyang, Guizhou 550025 (CN); DAI, Zonghong, Guiyang, Guizhou 550025 (CN)
(74) Representative: Goddar, Heinz J.
(86) International application number: PCT/CN2024/075238
(87) International publication number: WO 2025/039473

(57) **Abstract**

This application discloses a network model training method, a cloud platform, and a related apparatus, relating to the field of artificial intelligence technologies. The method includes: providing a parameter configuration user interface; obtaining a parameter count and a type of a target network model from the parameter configuration user interface; determining training configuration information of the target network model based on the parameter count and the type of the target network model, where a training process of the target network model is divided into a plurality of training phases, different training phases correspond to different model parameter counts, the model parameter counts of the plurality of training phases increase sequentially with the order of training, and the training configuration information includes configuration information of the plurality of training phases; and training the target network model based on the configuration information of the plurality of training phases. In this way, fine-grained phase-wise control on the network model training can be implemented, a convergence speed of the network model can be effectively accelerated, a computation amount required for the network model training can be reduced, and training costs of the network model can be reduced.

## Description

This application claims priorities to Chinese Patent Application No. 202311061555.2, filed on August 22, 2023 and entitled "MODEL TRAINING METHOD, CLOUD PLATFORM, AND RELATED APPARATUS", and to Chinese Patent Application No. 202311393706.4, filed on October 25, 2023 and entitled "NETWORK MODEL TRAINING METHOD, CLOUD PLATFORM, AND RELATED APPARATUS", both of which are incorporated herein by reference in their entireties.

### TECHNICAL FIELD

This application relates to the field of artificial intelligence technologies, and in particular, to a network model training method, a cloud platform, and a related apparatus.

### BACKGROUND

With continuous development and improvement of artificial intelligence technologies, neural network models have been widely used in fields such as natural language processing, computer vision, and speech recognition. Due to better capabilities of handling complex tasks and stronger generalization of neural network models with a large parameter count (also referred to as large-scale neural network models), neural network model parameter sizes have been increasing, and the demand for training neural network models with a large parameter count grows accordingly.

Currently, neural network models are mainly trained on a cloud computing platform. However, training functions provided by existing cloud computing platforms are simple, and cannot meet the requirements brought by the increasing parameter count. If a neural network model with a large parameter count is trained, it takes a longer time and requires greater computational workload, resulting in high training costs and low efficiency.

### SUMMARY

This application provides a network model training method, an apparatus, a device, a storage medium, and a computer program, to resolve a problem of low model training efficiency in a related technology. The technical solutions are as follows.

According to a first aspect, a network model training method is provided. The method includes: providing a parameter configuration user interface, where the parameter configuration user interface indicates a user to input a parameter count and a type of a to-be-trained target network model; obtaining the parameter count and the type of the target network model from the parameter configuration user interface; determining training configuration information of the target network model based on the parameter count and the type of the target network model, where a training process of the target network model is divided into a plurality of training phases, different training phases correspond to different model parameter counts, the model parameter counts of the plurality of training phases increase sequentially with the order of training, and the training configuration information includes configuration information of the plurality of training phases; and training the target network model based on the configuration information of the plurality of training phases.

In this application, the user can input the parameter count and the type of the target network model on the parameter configuration user interface, to determine the training configuration information of the target network model based on the parameter count and the type of the target network model. In this way, corresponding training configuration information can be determined, in a targeted manner, for network models that are with different parameter quantities and that are of different types, so that the parameter count of the model and the type of the model are more adaptive to the determined training configuration information. In addition, in this application, a training process of a network model with a large parameter count can be further divided into a plurality of phases, and model parameter counts of the plurality of training phases increase sequentially in a training sequence. In this way, fine-grained phase-wise control on the network model training can be implemented. In addition, because the parameter count of the network model gradually increases with the training phase, a convergence speed of the network model can be effectively accelerated, a computation amount required for the network model training can be reduced, and training costs of the network model can be reduced.

Optionally, the configuration information of the plurality of training phases includes model planning information, training planning information, and data planning information that correspond to each of the plurality of training phases, the model planning information indicates a model structure of a corresponding training phase, the training planning information indicates a training configuration parameter of the corresponding training phase, and the data planning information indicates configuration of training data of the corresponding training phase.

Optionally, the training planning information includes a model iteration quantity and a learning rate interval of the corresponding training phase, and the learning rate interval indicates a range of a step size of model parameter variation of the corresponding training phase.

Optionally, the training planning information further includes an expected loss value of the corresponding training phase, and the expected loss value indicates an expected difference between a predicted value and a real value of the network model of the corresponding training phase.

It should be noted that the expected loss value is determined based on the model iteration quantity and the learning rate interval of the corresponding training phase.

Optionally, the training planning information further includes at least one of a warm-up iteration quantity, a learning rate decay type, a parameter precision, and a batch size. The learning rate decay type indicates a way in which a step size of a model parameter varies, the parameter precision indicates a precision of the model parameter, the batch size indicates an amount of training data required in a single iteration, and the warm-up iteration quantity required for a learning rate in a 1^{st} training phase of the plurality of training phases changes from zero to a maximum learning rate, where the maximum learning rate is a largest value within a learning rate interval of the 1^{st} training phase.

Optionally, the training planning information may further include a random drop out rate. The random drop out rate is a proportion of neurons that do not participate in computation in each iteration during neural network training.

When types of network models are different, parameters included in the model planning information are different. Optionally, when the type of the target network model indicates that the target network model includes a self-attention network, the model planning information includes a quantity of self-attention networks in a network model of the corresponding training phase, a dimension of a hidden layer in each self-attention network, and a quantity of attention heads.

Optionally, for any training phase other than the 1^{st} training phase of the plurality of training phases, a value of any parameter included in model planning information of the training phase is greater than or equal to a value of a corresponding parameter included in model planning information of a previous training phase of the training phase. In addition, in parameters included in the model planning information of the training phase, there is at least one parameter whose value is greater than a value of a corresponding parameter of the previous training phase of the training phase. In other words, for two adjacent training phases of the plurality of training phases, a value of a parameter included in model planning information of a next training phase is greater than or equal to a value of a corresponding parameter included in model planning information of a previous training phase, and the values of the parameters included in model planning information of the two training phases are not completely equal.

Optionally, the model planning information further includes a model parameter count of the corresponding training phase. The model parameter count is determined based on the quantity of self-attention networks in the network model, the dimension of the hidden layer in each self-attention network, and the quantity of attention heads. The model parameter count is used to intuitively determine a scale of the network model of the training phase. A difference between a model parameter count of a last training phase and the parameter count that is of the target network model and that is input by the user is less than or equal to a parameter count difference threshold.

Optionally, the data planning information includes a proportion of a training data set of the corresponding training phase in a total training data set, and the total training data set is a sum of training data sets of the plurality of training phases.

Optionally, the data planning information further includes at least one of configuration information of pruning and configuration information of distillation preheating, the pruning is used to filter the training data set of the corresponding training phase to reduce redundant information, and the distillation preheating is used to determine an initial value of a model parameter of the 1^{st} training phase of the plurality of training phases.

Optionally, the configuration information of the pruning includes pruning status information, and the pruning status information indicates whether to filter the training data set of the corresponding training phase.

Optionally, the data planning information may further include a storage path of the training data set.

The parameter count and the type of the target network model are input into a training prediction model, to obtain first training configuration information output by the training prediction model, and the training configuration information of the target network model is determined based on the first training configuration information. In other words, in this application, corresponding training configuration information can be determined, in a targeted manner, for network models that are with different parameter quantities and that are of different types, so that the parameter count of the model and the type of the model are more adaptive to the determined training configuration information.

Optionally, a configuration preview user interface is provided. The configuration preview user interface includes the first training configuration information. The first training configuration information is modified in response to an operation of modifying the first training configuration information by the user, to obtain second training configuration information. The training configuration information of the target network model is determined based on the second training configuration information.

In other words, after determining the first training configuration information based on the parameter count and the type of the target network model, the user can further modify the first training configuration information, to obtain the training configuration information of the target network model, so as to implement refined customization of a training solution of the target network model, and effectively improve training efficiency of the neural network model.

For ease of description, subsequently, a quantity of the training phases, the model iteration quantity, the learning rate interval, the expected loss value, the warm-up iteration quantity, the learning rate decay type, the parameter precision, the batch size, the random drop out rate, the quantity of self-attention networks in the network model, the dimension of the hidden layer in each self-attention network, the quantity of attention heads, the model parameter count, the proportion of the training data set of the corresponding training phase in the total training data set, the configuration information of the pruning, and the configuration information of the distillation preheating are collectively referred to as planning parameters.

Based on the foregoing descriptions, the expected loss value is determined based on the model iteration quantity and the learning rate interval of the corresponding training phase, and the model parameter count is determined based on the quantity of self-attention networks in the network model, the dimension of the hidden layer in each self-attention network, and the quantity of attention heads. In other words, values of planning parameters such as the expected loss value and the model parameter count need to be determined based on values of other planning parameters and cannot be directly configured. Therefore, the planning parameters such as the expected loss value and the model parameter count may also be referred to as dependent variable parameters, and a planning parameter used to determine the dependent variable parameter is referred to as an independent variable parameter. A planning parameter that can be directly configured in the planning parameters may be referred to as a configurable parameter. Usually, the user may modify the configurable parameter.

Optionally, the first training configuration information includes values of a plurality of planning parameters, the second training configuration information also includes values of a plurality of planning parameters, and a value of at least one configurable parameter in the planning parameters has been modified by the user. In other words, the user modifies the value of the at least one configurable parameter in the first training configuration information. The value of the at least one configurable parameter is modified in response to a modification operation of the user.

During actual application, the configurable parameter may alternatively be the quantity of the training phases of the target network model.

Optionally, the configuration preview user interface further includes a phase adding button and a phase deleting button. The user can add a training phase by triggering the phase adding button, and delete a training phase by triggering the phase deleting button, to modify the quantity of the training phases.

Optionally, an implementation process of determining the training configuration information of the target network model based on the second training configuration information includes: If the at least one configurable parameter modified by the user includes an independent variable parameter, a value of a corresponding dependent variable parameter is re-determined based on a modified value of the independent variable parameter; and the value of the at least one configurable parameter, the re-determined value of the dependent variable parameter, and a value of a configurable parameter other than the at least one configurable parameter included in the first training configuration information are determined as the training configuration information of the target network model. If the at least one configurable parameter modified by the user includes no independent variable parameter, the value of the at least one configurable parameter and a value of a planning parameter other than the at least one configurable parameter included in the first training configuration information are determined as the training configuration information of the target network model.

The following describes, by using step (1) to step (4), an implementation process of training the target network model based on the configuration information of the plurality of training phases.

Step (1): Set i to 1, and determine an i^{th} network model based on configuration information of an i^{th} training phase of the plurality of training phases.

If the i^{th} training phase is the 1^{st} training phase of the plurality of training phases, the i^{th} network model is generated based on the configuration information of the i^{th} training phase; or if the i^{th} training phase is not the 1^{st} training phase, a trained (i-1)^{th} network model is expanded based on the configuration information of the i^{th} training phase, to obtain the i^{th} network model.

Optionally, the configuration information of the i^{th} training phase includes model planning information of the i^{th} training phase. In this case, an implementation process of expanding the trained (i-1)^{th} network model based on the configuration information of the i^{th} training phase, to obtain the i^{th} network model includes: A parameter expansion user interface is provided, where the parameter expansion user interface indicates the user to select a parameter expansion policy, and the parameter expansion policy is used to determine an initial value of a parameter newly added to the i^{th} network model relative to the (i-1)^{th} network model; the parameter expansion policy is obtained from the parameter expansion user interface; and parameter expansion is performed on the (i-1)^{th} network model based on the parameter expansion policy and the model planning information of the i^{th} training phase, to obtain the i^{th} network model.

Optionally, the parameter expansion policy includes a width expansion policy and a depth expansion policy. The width expansion policy indicates a manner of determining an initial value of a parameter of a newly added dimension of the hidden layer in the self-attention network. The depth expansion policy is a manner of determining an initial value of a parameter in a self-attention network newly added to the i^{th} network model relative to the (i-1)^{th} network model. In this case, an implementation process of performing parameter expansion on the (i-1)^{th} network model based on the parameter expansion policy and the model planning information of the i^{th} training phase includes: A dimension of a hidden layer in each self-attention network in the (i-1)^{th} network model is expanded based on the width expansion policy and the model planning information of the i^{th} training phase, to obtain an initial expanded model; and a self-attention network of the initial expanded model is expanded based on the depth expansion policy and the model planning information of the i^{th} training phase, to obtain the i^{th} network model.

An initial value of a parameter of a neuron newly added to a hidden layer in each self-attention network in the initial expanded model relative to the (i-1)^{th} network model is determined based on a value of a parameter of a neuron at the hidden layer in each self-attention network in the (i-1)^{th} network model and the width expansion policy, where a dimension of the hidden layer in each self-attention network in the initial expanded model is the same as a dimension of a hidden layer in each self-attention network in the network model of the i^{th} training phase, and a quantity of self-attention networks in the initial expanded model is the same as a quantity of self-attention networks in the (i-1)^{th} network model.

An initial value of a parameter in a self-attention network newly added to the i^{th} network model relative to the initial expanded model is determined based on a value of a parameter in the self-attention network in the initial expanded model and the depth expansion policy, where a dimension of a hidden layer in the self-attention network in the i^{th} network model is the same as the dimension of the hidden layer in each self-attention network in the network model of the i^{th} training phase, and a quantity of self-attention networks in the i^{th} network model is the same as a quantity of self-attention networks in the i^{th} network model.

Step (2): Train the i^{th} network model based on the configuration information of the i^{th} training phase, to obtain a trained i^{th} network model.

Before training the i^{th} network model based on the configuration information of the i^{th} training phase, to obtain the trained i^{th} network model, the user can further trigger a training start operation. In this case, the i^{th} network model is trained based on the configuration information of the i^{th} training phase in response to the training start operation triggered by the user.

Step (3): Determine a training evaluation result of the trained i^{th} network model, and provide a training evaluation user interface, where the training evaluation user interface includes the training evaluation result of the trained i^{th} network model, and the training evaluation user interface further indicates the user to determine whether training of the trained i^{th} network model is completed.

A loss curve of the i^{th} network model is determined, where the loss curve indicates variations of a loss value with a model iteration quantity, and the loss value indicates a difference between a predicted value and a real value of the network model; at least one test data set is input into the trained i^{th} network model, to obtain an inference result that is of the at least one test data set and that is output by the trained i^{th} network model; and the training evaluation result of the trained i^{th} network model is determined based on the loss curve and the inference result of the at least one test data set.

Optionally, in a process of training the i^{th} network model, the variations of the loss value of the i^{th} network model with the model iteration quantity is recorded. In this way, the loss curve of the i^{th} network model can be drawn based on the variations of the loss value of the i^{th} network model with the model iteration quantity.

An inference accuracy rate corresponding to each of the at least one test data set is determined based on the inference result of the at least one test data set, and the training evaluation result of the trained i^{th} network model is determined based on the inference accuracy rate corresponding to each of the at least one test data set, the loss curve of the i^{th} network model, and an expected loss value of the i^{th} training phase.

Optionally, the training evaluation result includes a loss value prediction evaluation result and a test set prediction evaluation result, the loss value prediction evaluation result indicates whether the loss value of the i^{th} network model meets an expected prediction, and the test set prediction evaluation result indicates whether the inference result of the at least one test data set meets the expected prediction. In this case, the inference accuracy rate corresponding to each of the at least one test data set, the loss curve of the i^{th} network model, and the expected loss value of the i^{th} training phase are input into the training prediction model, to obtain the loss value prediction evaluation result and the test set prediction evaluation result that are output by the training prediction model.

Optionally, the training evaluation result further includes training completion prediction information, and the training completion prediction information indicates prediction on whether the training of the trained i^{th} network model is completed. In this case, the inference accuracy rate corresponding to each of the at least one test data set, the loss curve of the i^{th} network model, and the expected loss value of the i^{th} training phase are input into the training prediction model, to obtain the training completion prediction information that is of the i^{th} training phase and that is output by the training prediction model.

The training evaluation result further includes the prediction on whether the training of the trained i^{th} network model is completed. In this way, reliable training completion prediction information can be provided for a user without training experience, and the training efficiency of the network model can be improved.

Optionally, the training evaluation user interface further includes at least one of the loss curve of the i^{th} network model and the inference accuracy rate corresponding to each of the at least one test data set. In this way, the user can determine, based on the loss curve of the i^{th} network model and/or the inference accuracy rate corresponding to each of the at least one test data set, and the training evaluation result, whether the training of the trained i^{th} network model is completed.

The training evaluation user interface further includes at least one of the loss curve of the i^{th} network model and the inference accuracy rate corresponding to each of the at least one test data set. In other words, a training evaluation result of a network model obtained in each training phase is presented to the user in real time through the training evaluation user interface. In this way, a training effect of each training phase can be controlled, so that the user discovers a possible existing problem in a training process in a timely manner, and the network model training efficiency is improved.

During actual application, after the training evaluation user interface is provided, the training evaluation result may be further modified in response to an operation of modifying the training evaluation result by the user, to obtain a modified training evaluation result.

Optionally, the training evaluation user interface includes the loss curve of the i^{th} network model, the inference accuracy rate corresponding to each of the at least one test data set, and the training evaluation result. In this case, the user can determine, based on the loss curve of the i^{th} network model and the inference accuracy rate corresponding to each of the at least one test data set, whether the training of the i^{th} network model meets an expectation, to obtain a training evaluation result of the user. If the training evaluation result of the user is inconsistent with the training evaluation result, the user can modify the training evaluation result. The training evaluation result is modified in response to an operation of modifying the training evaluation result by the user, to obtain a modified training evaluation result. If the training evaluation result of the user is consistent with the training evaluation result, the user does not modify the training evaluation result.

Step (4): If a training completion operation triggered by the user and that the i^{th} training phase is not the last training phase of the plurality of training phases are detected, set i=i+1, and return to the step of determining the i^{th} submodel based on the configuration information of the i^{th} training phase of the plurality of training phases; or if the training completion operation triggered by the user and that the i^{th} training phase is the last training phase of the plurality of training phases are detected, the trained i^{th} network model is used as a trained target network model.

Optionally, when determining that the training of the trained i^{th} network model is completed, the user can trigger a training completion operation on the training evaluation user interface. In this case, when the training completion operation triggered by the user and that the i^{th} training phase is not the last training phase of the plurality of training phases are detected, i=i+1 is set, and the step of determining the i^{th} submodel based on the configuration information of the i^{th} training phase of the plurality of training phases is returned; or when the i^{th} training phase is the last training phase of the plurality of training phases, the trained i^{th} network model is used as the trained target network model.

Optionally, when determining that the training of the trained i^{th} network model is not completed, the user can trigger a training continue operation or a re-planning operation on the training evaluation user interface. The training continue operation indicates to continue training the i^{th} network model, and the re-planning operation indicates to return to the step of determining the training configuration information of the target network model, to re-determine the training configuration information of the target network model. If the user triggers the training continue operation, the training continue operation triggered by the user is detected, and the training of the i^{th} network model is continued based on the configuration information of the i^{th} training phase. If the user triggers the re-planning operation, the step of determining the training configuration information of the target network model is returned, to re-determine the training configuration information of the target network model.

After the training completion operation triggered by the user and that the i^{th} training phase is not the last training phase of the plurality of training phases are detected, configuration information of at least one training phase that follows the i^{th} training phase among the plurality of training phases may be further optimized. There are a plurality of implementations for optimizing the configuration information of the at least one training phase that follows the i^{th} training phase among the plurality of training phases. The following describes two implementations.

In a first implementation, the configuration information of the at least one training phase that follows the i^{th} training phase among the plurality of training phases is optimized based on at least one of the loss curve of the i^{th} network model and the inference result of the at least one test data set.

Optionally, at least one of the loss curve and the inference result of the at least one test data set is input into the training prediction model, to obtain optimized configuration information that is of the at least one training phase after the i^{th} training phase and that is output by the training prediction model, so as to optimize the configuration information of the at least one training phase after the i^{th} training phase.

Optionally, after the training evaluation user interface is provided, the training evaluation result may be further modified in response to an operation of modifying the training evaluation result by the user, to obtain a modified training evaluation result. In this case, the configuration information of the at least one training phase that follows the i^{th} training phase among the plurality of training phases is optimized based on the training evaluation result before the modification, the modified training evaluation result, and at least one of the loss curve of the i^{th} network model and the inference result of the at least one test data set.

The determined training evaluation result may not meet an expectation of the user. In this case, the user can modify the training evaluation result. In this way, configuration information of a subsequent training phase is adjusted in a timely manner based on interaction between the user and an execution body of this application, a loss curve, and an inference result of a test data set, so that a finally trained network model better meets the expectation of the user.

Optionally, the training evaluation result before the modification, the modified training evaluation result, and at least one of the loss curve of the i^{th} network model and the inference result of the at least one test data set are input into the training prediction model, to obtain optimized configuration information that is of the at least one training phase after the i^{th} training phase and that is output by the training prediction model, so as to optimize the configuration information of the at least one training phase after the i^{th} training phase.

Optionally, after the trained i^{th} network model is obtained, forgetting evaluation is performed on the trained i^{th} network model to obtain a forgetting evaluation result, where the forgetting evaluation result indicates inference performance of the trained i^{th} network model on a training data set of a historical training phase, and the historical training phase is a training phase preceding the i^{th} training phase among the plurality of training phases. In this case, if it is determined, based on the forgetting evaluation result, that an inference accuracy rate of at least one historical training phase is not greater than an accuracy rate threshold, the configuration information of the at least one training phase that follows the i^{th} training phase among the plurality of training phases is optimized based on the training evaluation result before the modification, the modified training evaluation result, the forgetting evaluation result, and at least one of the loss curve of the i^{th} network model and the inference result of the at least one test data set. Otherwise, the configuration information of the at least one training phase that follows the i^{th} training phase among the plurality of training phases is optimized based on the training evaluation result before the modification, the modified training evaluation result, and at least one of the loss curve and the inference result of the at least one test data set.

Optionally, the forgetting evaluation result is not forgotten or forgotten, not forgotten indicates that there is at least one historical training phase whose inference accuracy rate is not greater than the accuracy rate threshold, and forgotten indicates that there is at least one historical training phase whose inference accuracy rate is not greater than the accuracy rate threshold. In this case, if there is at least one historical training phase whose inference accuracy rate is not greater than the accuracy rate threshold in an inference accuracy rate corresponding to each of at least one target historical data set, it is determined that the forgetting evaluation result is forgotten; or if there is no at least one historical training phase whose inference accuracy rate is not greater than the accuracy rate threshold in an inference accuracy rate corresponding to each of at least one target historical data set, it is determined that the forgetting evaluation result is not forgotten.

It should be noted that when the forgetting evaluation result of the trained i^{th} network model indicates that there is at least one historical training phase whose inference accuracy rate is not greater than the accuracy rate threshold, it indicates that an accuracy rate of inference performed by the trained i^{th} network model on the training data set of the historical training phase is low, and a forgetting phenomenon exists. Therefore, a training data set corresponding to the at least one training phase after the i^{th} training phase includes a part or all of a training data set of a forgotten training phase. In this way, it can be ensured that a data set of the forgotten training phase is reviewed in a subsequent training phase, so that inference performance of the target network model is improved.

In a second implementation, after the trained i^{th} network model is obtained, forgetting evaluation is performed on the trained i^{th} network model, to obtain a forgetting evaluation result. In this case, if it is determined, based on the forgetting evaluation result, that an inference accuracy rate of at least one historical training phase is not greater than an accuracy rate threshold, the configuration information of the at least one training phase that follows the i^{th} training phase among the plurality of training phases is optimized based on at least one of the forgetting evaluation result, the loss curve of the i^{th} network model, and the inference result of the at least one test data set. Otherwise, the configuration information of the at least one training phase that follows the i^{th} training phase among the plurality of training phases is optimized based on at least one of the loss curve of the i^{th} network model and the inference result of the at least one test data set.

According to a second aspect, a network model training apparatus is provided. The network model training apparatus has a function of implementing behavior of the network model training method according to the first aspect. The network model training apparatus includes at least one module. The at least one module is configured to implement the network model training method according to the first aspect.

According to a third aspect, a computing device cluster is provided. The computing device cluster includes at least one computing device, each computing device includes a processor and a memory, and the processor of the at least one computing device is configured to execute instructions stored in the memory of the at least one computing device, to cause the computing device cluster to perform the network model training method according to the first aspect.

Optionally, each computing device may further include a communication bus. The communication bus is used to establish a connection between the processor and the memory of each computing device.

According to a fourth aspect, a computer-readable storage medium is provided. The storage medium includes computer program instructions. When the computer program instructions are executed by a computing device cluster, the computing device cluster is caused to perform the steps of the network model training method according to the first aspect.

According to a fifth aspect, a computer program product including instructions is provided. When the instructions are run by a computing device cluster, the computing device cluster is caused to perform the steps of the network model training method according to the first aspect.

Technical effects achieved in the second aspect, the third aspect, the fourth aspect, and the fifth aspect are similar to the technical effects achieved by the corresponding technical means in the first aspect. Details are not described herein again.

### BRIEF DESCRIPTION OF DRAWINGS

FIG. 1 is a diagram of an implementation environment according to an embodiment of this application;
FIG. 2 is a diagram of interaction between units included in a cloud platform according to an embodiment of this application;
FIG. 3 is a flowchart of a network model training method according to an embodiment of this application;
FIG. 4 is a diagram of a parameter configuration user interface according to an embodiment of this application;
FIG. 5 is a diagram of training planning information according to an embodiment of this application;
FIG. 6 is a diagram of other training planning information according to an embodiment of this application;
FIG. 7 is a diagram of model planning information according to an embodiment of this application;
FIG. 8 is a diagram of data planning information according to an embodiment of this application;
FIG. 9 is a diagram of a configuration preview user interface according to an embodiment of this application;
FIG. 10 is a diagram of a parameter expansion user interface according to an embodiment of this application;
FIG. 11 is a diagram of a user interface according to an embodiment of this application;
FIG. 12 is a diagram of a training evaluation user interface according to an embodiment of this application;
FIG. 13 is a diagram of a training record user interface according to an embodiment of this application;
FIG. 14 is a flowchart of another network model training method according to an embodiment of this application;
FIG. 15 is a diagram of a structure of a network model training apparatus according to an embodiment of this application;
FIG. 16 is a diagram of a structure of a computer device according to an embodiment of this application;
FIG. 17 is a diagram of an architecture of a computing device cluster according to an embodiment of this application; and
FIG. 18 is a diagram of a connection between computing devices according to an embodiment of this application.

### DESCRIPTION OF EMBODIMENTS

To make the objectives, technical solutions, and advantages of this application clearer, the following further describes implementations of this application in detail with reference to the accompanying drawings.

For ease of understanding, before a network model training method provided in embodiments of this application is described in detail, an application scenario and an implementation environment in embodiments of this application are first described.

First, the application scenario in embodiments of this application is described.

With continuous development and improvement of artificial intelligence technologies, neural network models have been widely used in fields such as natural language processing, computer vision, and speech recognition. Due to a better complex task processing capability, a better generalization capability, and the like of a neural network model with a large parameter count (also referred to as a large-scale neural network model), a parameter count of a neural network model is increasing, and a training requirement for a neural network model with a large parameter count is also increasing. Training of a GPT-3 neural network model with 175 billion parameters is used as an example. It takes at least one month to train the GPT-3 neural network model using 1024 currently most advanced graphics processing units each with an 80 GB video memory.

Currently, a neural network model is mainly trained via a cloud computing platform. However, a training function provided by an existing cloud computing platform is simple, and cannot adapt to a requirement brought by a continuous increasing parameter count. A user cannot finely customize a training solution of the user to improve training efficiency of the neural network model, and the cloud computing platform cannot accelerate training of the neural network model because the cloud computing platform cannot provide training experience of the neural network model for the user to optimize a training process of the neural network model. If a neural network model with a large parameter count is trained, longer training duration and a larger computation amount need to be consumed, resulting in high training costs and low training efficiency of the model.

In view of this, embodiments of this application provide a network model training method. A user can input a parameter count and a type of a to-be-trained target network model on a parameter configuration user interface, to determine training configuration information of the target network model based on the parameter count and the type of the target network model. In this way, corresponding training configuration information can be determined, in a targeted manner, for network models that are with different parameter quantities and that are of different types, so that the parameter count of the model and the type of the model are more adaptive to the determined training configuration information. In addition, in embodiments of this application, a training process of a network model with a large parameter count can be further divided into a plurality of phases, and model parameter counts of the plurality of training phases increase sequentially in a training sequence. In this way, fine-grained phase-wise control on network model training can be implemented. In addition, because the parameter count of the network model gradually increases with the training phase, a convergence speed of the network model can be effectively accelerated, a computation amount required for the network model training can be reduced, and training costs of the network model can be reduced.

The network model training method provided in embodiments of this application may be performed by a cloud platform or an electronic device having a model training function. The cloud platform may be a server cluster or a distributed system including a plurality of physical servers, or the like; or may be a cloud server that provides basic cloud computing services such as a cloud service, a cloud database, cloud computing, a cloud function, cloud storage, a network service, cloud communication, a middleware service, a domain name service, a security service, a content delivery network (content delivery network, CDN), a big data and artificial intelligence platform; or a cloud computing service center.

Next, an implementation environment related to embodiments of this application is described. In addition, based on the foregoing descriptions, the network model training method provided in embodiments of this application may be performed by a cloud platform or an electronic device having a model training function. The cloud platform is used as an example below for description.

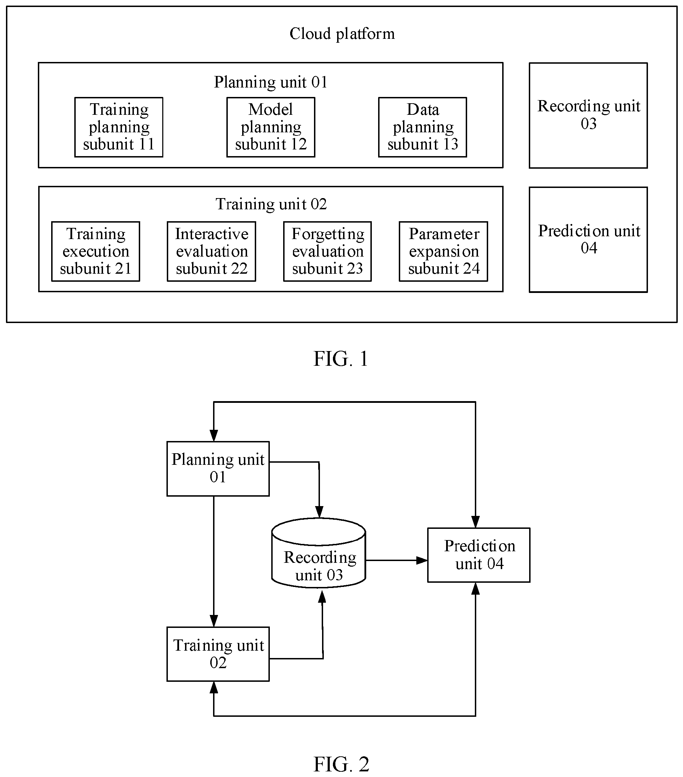

FIG. 1 is a diagram of an implementation environment according to an embodiment of this application. The implementation environment includes a planning unit 01, a training unit 02, a recording unit 03, and a prediction unit 04. The planning unit 01 includes a training planning subunit 11, a model planning subunit 12, and a data planning subunit 13. The training unit 02 includes a training execution subunit 21, an interactive evaluation subunit 22, a forgetting evaluation subunit 23, and a parameter expansion subunit 24.

The training planning subunit 11 is configured to determine training planning information corresponding to each of a plurality of training phases. The model planning subunit 12 is configured to determine model planning information corresponding to each of the plurality of training phases. The data planning subunit 13 is configured to determine data planning information corresponding to each of the plurality of training phases. The training execution subunit 21 is configured to train a network model of each training phase. The interactive evaluation subunit 22 is configured to perform training evaluation on a trained network model of each training phase. The forgetting evaluation subunit 23 is configured to perform forgetting evaluation on the trained network model of each training phase. The parameter expansion subunit 24 is configured to expanse a parameter of the network model of each training phase. The recording unit 03 is configured to record model planning information, training planning information, and data planning information that correspond to each of the plurality of training phases of a target network model, variations of a loss rate of the target network model in a training process, a training evaluation result of the trained network model of each training phase, a forgetting evaluation result of the trained network model of each training phase, a parameter expansion policy of the target network model, and an interaction operation between a user and a cloud platform. The prediction unit 04 is configured to: determine first training configuration information based on a parameter count and a type of the target network model, predict the training evaluation result of the trained network model of each phase, predict the forgetting evaluation result of the trained network model of each phase, predict the parameter expansion policy of the network model, and provide a suggestion for training the target network model.

Optionally, the prediction unit 04 may be a training prediction model. The cloud platform inputs the parameter count and the type of the target network model into the training prediction model, to obtain first training configuration information output by the training prediction model. The training prediction model can further predict the training evaluation result of the trained network model of each phase, predict the forgetting evaluation result of the trained network model of each phase, predict the parameter expansion policy of the network model, and provide the suggestion for training the target network model.

It should be noted that the training prediction model may be a generative model. The generative model can learn and abstract an essential rule and a probability distribution of data by training a large-scale data set based on a deep neural network, to generate new data.

FIG. 2 is a diagram of interaction between units included in a cloud platform according to an embodiment of this application. A planning unit 01 can obtain a parameter count and a type of a target network model, and send the parameter count and the type of the target network model to a prediction unit 04. The prediction unit 04 determines first training configuration information based on the parameter count and the type of the target network model, and sends the first training configuration information to the planning unit 01 after determining the first training configuration information. The planning unit 01 determines training configuration information of the target network model based on the first training configuration information, and then sends the training configuration information of the target network model to a training unit 02 and a recording unit 03. The training unit 02 receives the training configuration information that is of the target network model and that is sent by the planning unit 01, and trains the target network model based on the training configuration information of the target network model. The training unit 02 can further invoke the prediction unit 04 to predict a training evaluation result of a trained network model of each phase, predict a forgetting evaluation result of the trained network model of each phase, predict a parameter expansion policy of the network model, and provide a suggestion for training the target network model. Then, the prediction unit 04 sends the predicted training evaluation result, forgetting evaluation result, and parameter expansion policy to the training unit 02. The training unit 02 receives the training evaluation result, the forgetting evaluation result, and the parameter expansion policy that are predicted and sent by the prediction unit 04. The training unit 02 further sends an interaction operation between a user and the cloud platform and a training status of the network model of each training phase to the recording unit 03. The recording unit 03 stores the training configuration information that is of the target network model and that is sent by the planning unit 01, and stores the interaction operation between the user and the cloud platform and a specific status of the trained network model of each training phase that are sent by the training unit 02. The recording unit 03 can further send all information stored in the recording unit 03 to the prediction unit 04, and the prediction unit 04 receives all the information sent by the recording unit 03.

In some embodiments, the recording unit 03 can further provide a training record user interface, and the user can view configuration information and a training record of any training phase on the training record user interface. The training record includes the training status of the network model of each training phase.

For example, the training status may include a loss curve corresponding to any training phase, an inference accuracy rate corresponding to each of at least one test data set, and a training log. This is not limited in embodiments of this application.

It should be noted that the application scenario and the implementation environment that are described in embodiments of this application are intended to describe the technical solutions in embodiments of this application more clearly, and do not constitute a limitation on the technical solutions provided in embodiments of this application. A person of ordinary skill in the art may be aware that, as a technology evolves and a new application scenario emerges, the technical solutions provided in embodiments of this application are also applicable to a similar technical problem.

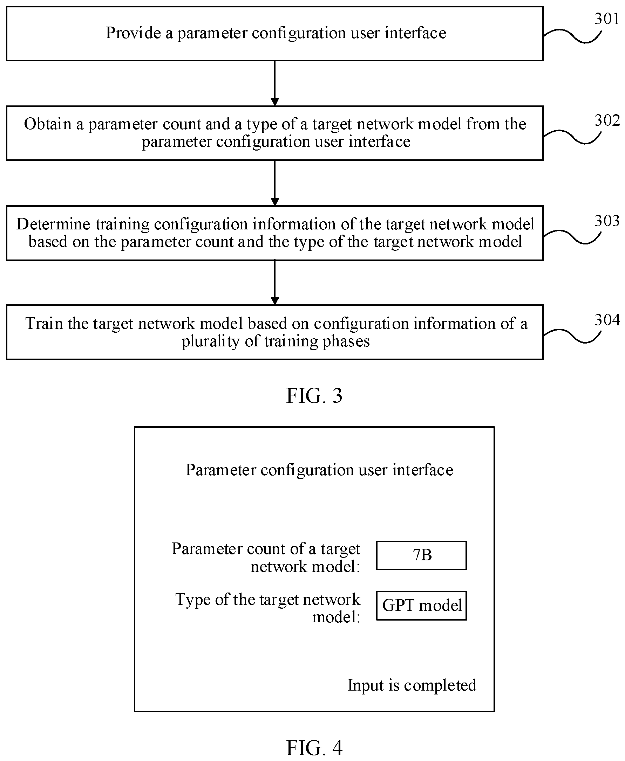

FIG. 3 is a flowchart of a network model training method according to an embodiment of this application. With reference to FIG. 3, the method includes the following steps. For ease of description, the network model training method provided in embodiments of this application is subsequently described by using a cloud platform as an execution body.

**Step 301:** Provide a parameter configuration user interface, where the parameter configuration user interface indicates a user to input a parameter count and a type of a to-be-trained target network model.

During actual application, the type of the network model may be a BERT (bidirectional encoder representations from transformer, bidirectional encoder representations from transformer) model, a GPT (Generative Pre-trained Transformer, generative pre-trained transformer) model, a T5 (Text-To-Text Transfer Transformer, text-to-text transfer transformer) model, a ResNet (residual network, residual network) model, or the like. This is not limited in embodiments of this application.

**Step 302:** Obtain the parameter count and the type of the target network model from the parameter configuration user interface.

In some embodiments, the cloud platform obtains the parameter count and the type of the target network model from the parameter configuration user interface in response to an input completion operation triggered by the user.

After inputting the parameter count and the type of the target network model, the user can trigger the input completion operation. In response to the input completion operation triggered by the user, the cloud platform obtains the parameter count and the type of the target network model from the parameter configuration user interface.

For example, refer to FIG. 4. The cloud platform may provide a parameter configuration user interface shown in FIG. 4. The user can input the parameter count of the target network model (also referred to as a scale of the target network model) on the parameter configuration user interface shown in FIG. 4 as 7 billion (billion, B), and the type of the target network model as the GPT model. After the user inputs the parameter count and the type of the target network model, the user triggers the input completion operation. In response to the input completion operation triggered by the user, the cloud platform obtains the parameter count and the type of the target network model from the parameter configuration user interface.

**Step 303:** Determine training configuration information of the target network model based on the parameter count and the type of the target network model, where a training process of the target network model is divided into a plurality of training phases, different training phases correspond to different model parameter counts, the model parameter counts of the plurality of training phases increase sequentially with the order of training, and the training configuration information of the target network model includes configuration information of the plurality of training phases.

In some embodiments, the configuration information of the plurality of training phases includes model planning information, training planning information, and data planning information that correspond to each of the plurality of training phases, the model planning information indicates a model structure of a corresponding training phase, the training planning information indicates a training configuration parameter of the corresponding training phase, and the data planning information indicates configuration of training data of the corresponding training phase.

The following separately describes the model planning information, the training planning information, and the data planning information.

### 1. Training planning information

Optionally, the training planning information includes a model iteration quantity and a learning rate interval of the corresponding training phase, and the learning rate interval indicates a range of a step size of model parameter variation of the corresponding training phase.

It should be noted that, for any training phase other than a 1^{st} training phase of the plurality of training phases, a maximum value of a learning rate interval of the training phase is a minimum value of a learning rate interval of a previous training phase of the training phase, and a minimum value of a learning rate interval of a last training phase of the plurality of training phases is 0.

Optionally, the training planning information further includes an expected loss value of the corresponding training phase, and the expected loss value indicates an expected difference between a predicted value and a real value of a network model of the corresponding training phase.

It should be noted that the expected loss value is determined based on the model iteration quantity and the learning rate interval of the corresponding training phase. For example, the cloud platform can input a model iteration quantity and a learning rate interval of each training phase into a training prediction model, to obtain an expected loss value that is of each training phase and that is output by the training prediction model. Certainly, during actual application, the expected loss value may alternatively be determined in another manner. This is not limited in this application.

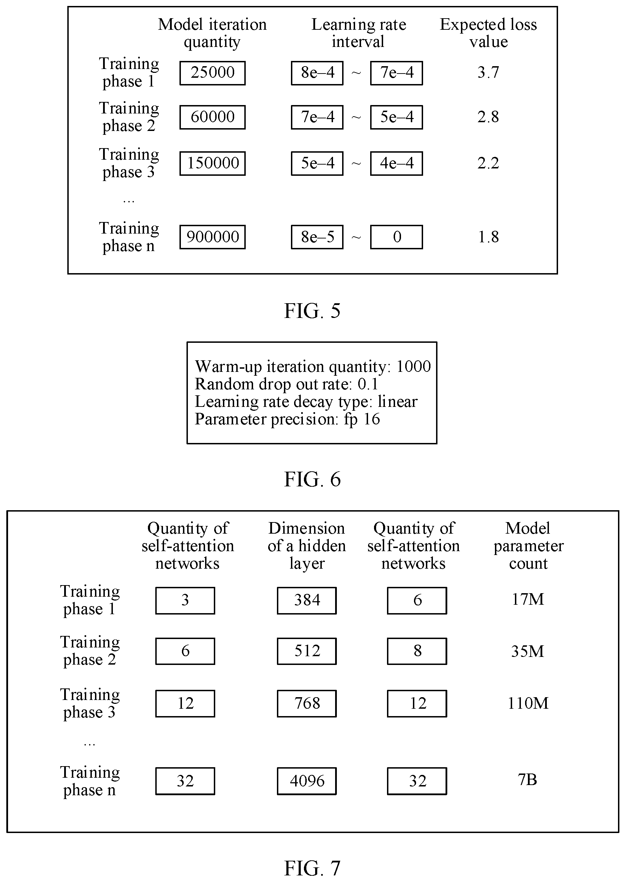

For example, FIG. 5 is a diagram of training planning information. A training process of a target network model in FIG. 5 is divided into a training phase 1 to a training phase n, and training planning information of each of the training phase 1 to the training phase n includes a model iteration quantity, a learning rate interval, and an expected loss value. In the training phase 1, the model iteration quantity is 25000, the learning rate interval is 8e-4 (that is, 8×10⁻⁴) to 7e-4 (that is, 7×10⁻⁴), and the expected loss value is 3.7. For the training phase 2, the model iteration quantity is 60000, the learning rate interval is 7e-4 to 5e-4, and the expected loss value is 2.8. For the training phase 3, the model iteration quantity is 150000, the learning rate interval is 5e-4 to 4e-4, and the expected loss value is 2.2. For the training phase n, the model iteration quantity is 900000, the learning rate interval is 8e-5 (namely, a minimum value of a learning rate interval of the training phase n-1) to 0, and the expected loss value is 1.8.

In some embodiments, the training planning information further includes at least one of a warm-up iteration quantity, a learning rate decay type, a parameter precision, and a batch size, where the learning rate decay type indicates a way in which a step size of a model parameter varies, the parameter precision indicates a precision of the model parameter, the batch size indicates an amount of training data required in a single iteration, and the warm-up iteration quantity required for a learning rate in the 1^{st} training phase of the plurality of training phases changes from zero to a maximum learning rate, where the maximum learning rate is a largest value within a learning rate interval of the 1^{st} training phase.

For example, the learning rate decay type includes linear attenuation and exponential attenuation. This is not limited in embodiments of this application.

For example, the parameter precision includes fp16 and fp32. This is not limited in embodiments of this application. fpl6 is also referred to as a half-precision floating-point (half-precision floating-point) number, and occupies 16-bit (bit) storage space, including one sign bit, five exponent bits, and 10 mantissa bits. fp32 is also referred to as a single-precision floating-point (single-precision floating-point) number, and occupies 32-bit (bit) storage space, including one sign bit, eight exponent bits, and 23 mantissa bits.

Optionally, the training planning information may further include a random drop out rate (drop out rate). The random drop out rate refers to a proportion of neurons that do not participate in computation (namely, neurons whose outputs are set to 0) in each iteration during neural network training.

A value range of the random drop out rate is 0 to 1. For example, the random drop out rate may be 0.5. In this case, outputs of about half of neurons are set to 0 per iteration.

It should be noted that learning rate decay types, parameter precision, batch sizes, and random drop out rates of all the training phases are the same. In other words, in an entire training process of the target network model, the learning rate decay type, the parameter precision, the batch size, and the random drop out rate remain unchanged.

For example, refer to FIG. 6. In the training planning information, the warm-up iteration quantity is 1000, the random drop out rate is 0.1, the learning rate decay type is linear attenuation, and the parameter precision is fp16.

### 2. model planning information

Based on the foregoing descriptions, there are a plurality of types of network models. When types of network models are different, parameters included in the model planning information are different. For example, when the type of the target network model indicates that the target network model includes a self-attention network, the model planning information includes a quantity of self-attention networks in a network model of the corresponding training phase, a dimension of a hidden layer in each self-attention network, and a quantity of attention heads.

It should be noted that the dimension of the hidden layer is a quantity of neurons at the hidden layer.

The BERT model, the GPT model, and the T5 model are all transformer architecture-based pre-training language models. The BERT model, the GPT model, or the T5 model includes a self-attention network, in other words, the transformer architecture-based pre-training language model includes a self-attention network. In this case, if the type of the target network model is a BERT model, a GPT model, or a T5 model, the model planning information includes the quantity of self-attention networks in the network model of the corresponding training phase, the dimension of the hidden layer in each self-attention network, and the quantity of attention heads.

Optionally, for any training phase other than the 1^{st} training phase of the plurality of training phases, a value of any parameter included in model planning information of the training phase is greater than or equal to a value of a corresponding parameter included in model planning information of a previous training phase of the training phase. In addition, in parameters included in the model planning information of the training phase, there is at least one parameter whose value is greater than a value of a corresponding parameter of the previous training phase of the training phase. In other words, for two adjacent training phases of the plurality of training phases, a value of a parameter included in model planning information of a next training phase is greater than or equal to a value of a corresponding parameter included in model planning information of a previous training phase, and values of parameters included in model planning information of the two training phases are not completely equal.

A transformer architecture-based network model is used as an example. For any training phase other than the 1^{st} training phase of the plurality of training phases, a quantity of self-attention networks in a network model of the training phase is greater than or equal to a quantity of self-attention networks in a network model of a previous training phase of the training phase, and a dimension of a hidden layer in each self-attention network in the network model of the training phase is greater than or equal to a dimension of a hidden layer in each self-attention network in the network model of the previous training phase of the training phase, a quantity of attention heads in the network model of the training phase is greater than or equal to a quantity of attention heads in the previous trained network model of the training phase, and values of the foregoing three parameters are not all equal to values of corresponding parameters of the previous training phase. In this way, it can be ensured that scales of network models of the plurality of training phases increase sequentially, so that the model parameter counts of the plurality of training phases can increase sequentially in the training sequence. Therefore, fine-grained phase-wise control on network model training can be implemented. In addition, because the parameter count of the network model gradually increases with the training phase, a convergence speed of the network model can be effectively accelerated, a computation amount required for the network model training can be reduced, and training costs of the network model can be reduced.

Optionally, the model planning information further includes a model parameter count of the corresponding training phase.

In some embodiments, the model parameter count is determined based on the quantity of self-attention networks in the network model, the dimension of the hidden layer in each self-attention network, and the quantity of attention heads. The model parameter count is used to intuitively determine a scale of the network model of the training phase. A difference between a model parameter count of a last training phase and the parameter count that is of the target network model and that is input by the user is less than or equal to a parameter count difference threshold.

The parameter count difference threshold is preset. For example, the parameter count difference may be set to 20. In addition, in different cases, adjustment may alternatively be performed based on different requirements.

FIG. 7 is a diagram of model planning information. A training process of a target network model in FIG. 7 is divided into a training phase 1 to a training phase n. model planning information includes a quantity of self-attention networks in a network model of a corresponding training phase, a dimension of a hidden layer in each self-attention network, a quantity of attention heads, and a model parameter count of the corresponding training phase. In a network model of the training phase 1, a quantity of self-attention networks is 3, a dimension of a hidden layer in each self-attention network is 384, a quantity of attention heads is 6, and a model parameter count is 17 million (million, M), in other words, the model parameter count is 17×10⁶. In a network model of the training phase 2, a quantity of self-attention networks is 6, a dimension of a hidden layer in each self-attention network is 512, a quantity of attention heads is 8, and a model parameter count is 35 M, in other words, the model parameter count is 35×10⁶. In a network model of the training phase 3, a quantity of self-attention networks is 12, a dimension of a hidden layer in each self-attention network is 768, a quantity of attention heads is 12, and a model parameter count is 110 M, in other words, the model parameter count is 110×10⁶. In a network model of the training phase n, a quantity of self-attention networks is 32, a dimension of a hidden layer in each self-attention network is 4096, a quantity of attention heads is 32, and a model parameter count is 7 B, in other words, the model parameter count is 7×10⁹.

### 3. Data planning information

In some embodiments, the data planning information includes a proportion of a training data set of the corresponding training phase in a total training data set, and the total training data set is a sum of training data sets of the plurality of training phases.

Optionally, the data planning information further includes at least one of configuration information of pruning and configuration information of distillation preheating, the pruning is used to filter the training data set of the corresponding training phase to reduce redundant information, and the distillation preheating is used to determine an initial value of a model parameter of the 1^{st} training phase of the plurality of training phases.

For example, the configuration information of the pruning includes pruning status information, and the pruning status information indicates whether to filter the training data set of the corresponding training phase.

In some embodiments, the pruning status information may be enabled or disabled. If the pruning status information is enabled, it indicates to filter the training data set of the corresponding training phase. If the pruning status information is disabled, it indicates not to filter the training data set of the corresponding training phase. Certainly, during actual application, whether to filter the training data set of the corresponding training phase may be alternatively indicated in another manner. This is not limited in embodiments of this application.

During actual application, pruning may be performed according to a plurality of methods, for example, a pruning method based on a forgetting score, and a pruning method based on an error L2-norm (error L2-norm, eL2n). When there are a plurality of pruning methods, and the pruning status information indicates to filter the training data set of the corresponding training phase, the configuration information of the pruning further includes indication information of a target pruning method, and the target pruning method is one of the plurality of pruning methods.

It should be noted that, when the training data set of the corresponding training phase is filtered, pruning methods of all the training phases are the same, in other words, a training data set is filtered according to the target pruning method in each training phase.

For example, the configuration information of the distillation preheating includes distillation preheating status information, and the distillation preheating status information indicates whether to perform distillation preheating on the network model, to determine the initial value of the model parameter of the 1^{st} training phase.

In some embodiments, the distillation preheating status information may be enabled or disabled. If the distillation preheating status information is enabled, it indicates to perform distillation preheating on the network model. If the distillation preheating status information is disabled, it indicates not to perform distillation preheating on the network model. Certainly, during actual application, whether to perform distillation preheating on the network model may be alternatively indicated in another manner. This is not limited in embodiments of this application.

In a training process of the network model, whether an initial value of a model parameter is appropriate greatly affects a result. An inappropriate initial value may cause slow convergence or incapability of convergence during training of the network model. Therefore, to accelerate a convergence speed of the network model in the training process and improve performance of the network model, in some embodiments, before inputting the 1^{st} training phase, distillation preheating may be performed on the network model, to determine the initial value of the model parameter of the 1^{st} training phase.

In some embodiments, the cloud platform pre-stores a general corpus package. When it is determined to perform distillation preheating on the network model, before the 1^{st} training phase, the network model of the 1^{st} training phase is pre-trained by using the general corpus package, to determine the initial value of the model parameter of the 1^{st} training phase, to implement distillation preheating on the target network model. Certainly, the foregoing performing distillation preheating on the network model by using the general corpus package is merely an implementation. During actual application, distillation preheating may be performed on the network model in another manner. For example, distillation preheating is performed according to a Xavier initialization (also referred to as Glorot initialization) method. This is not limited in embodiments of this application.

It should be noted that, when the distillation preheating status information indicates to perform distillation preheating on the network model, and there are a plurality of distillation preheating methods, the configuration information of the distillation preheating further includes indication information of a target distillation preheating method, and the target distillation preheating method is one of the plurality of distillation preheating methods.

During actual application, the data planning information may further include other content such as a storage path of the training data set. This is not limited in embodiments of this application.

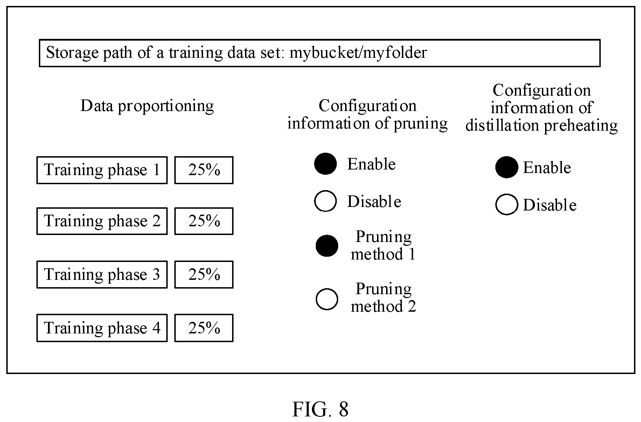

For example, FIG. 8 is a diagram of data planning information. A training process of a target network model in FIG. 8 is divided into a training phase 1 to a training phase 4. Data planning information includes a proportion of a training data set of a corresponding training phase in a total training data set, configuration information of pruning, configuration information of distillation preheating, and a storage path of the training data set. The configuration information of the pruning includes pruning status information and a target pruning method, the configuration information of the distillation preheating includes distillation preheating status information. Pruning methods include a pruning method 1 and a pruning method 2. The pruning method 1 is a pruning method based on a forgetting score, and the pruning method 2 is a pruning method based on an error L2-norm. A proportion of a training data set of the training phase 1 in the total training data set is 25%, a proportion of a training data set of the training phase 2 in the total training data set is 25%, a proportion of a training data set of the training phase 3 in the total training data set is 25%, and a proportion of a training data set of the training phase 4 in the total training data set is 25%. The pruning status information is enabled, and the target pruning method is the pruning method 1. The distillation preheating status information is enabled. The training data set is stored in an object storage service (object storage service, OBS), and a storage path of the training data set is mybucket/myfolder.

**The foregoing describes detailed content included in the training configuration information of the target network model. The following describes a process of determining the training configuration information of the target network model.**

The parameter count and the type of the target network model are input into a training prediction model, to obtain first training configuration information output by the training prediction model, and the training configuration information of the target network model is determined based on the first training configuration information.

In other words, in embodiments of this application, corresponding training configuration information can be determined, in a targeted manner, for network models that are with different parameter quantities and that are of different types, so that the parameter count of the model and the type of the model are more adaptive to the determined training configuration information.

In some embodiments, the first training configuration information may be directly determined as the training configuration information of the target network model. In some other embodiments, a configuration preview user interface may be further provided. The configuration preview user interface includes the first training configuration information. The first training configuration information is modified in response to an operation of modifying the first training configuration information by the user, to obtain second training configuration information. The training configuration information of the target network model is determined based on the second training configuration information.

In other words, after determining the first training configuration information based on the parameter count and the type of the target network model, the user can further modify the first training configuration information, to obtain the training configuration information of the target network model, so as to implement refined customization of a training solution of the target network model, and effectively improve training efficiency of the neural network model.

For ease of description, subsequently, a quantity of the training phases, the model iteration quantity, the learning rate interval, the expected loss value, the warm-up iteration quantity, the learning rate decay type, the parameter precision, the batch size, the random drop out rate, the quantity of self-attention networks in the network model, the dimension of the hidden layer in each self-attention network, the quantity of attention heads, the model parameter count, the proportion of the training data set of the corresponding training phase in the total training data set, the configuration information of the pruning, and the configuration information of the distillation preheating are collectively referred to as planning parameters.

Based on the foregoing descriptions, the expected loss value is determined based on the model iteration quantity and the learning rate interval of the corresponding training phase, and the model parameter count is determined based on the quantity of self-attention networks in the network model, the dimension of the hidden layer in each self-attention network, and the quantity of attention heads. In other words, values of planning parameters such as the expected loss value and the model parameter count need to be determined based on values of other planning parameters and cannot be directly configured. Therefore, the planning parameters such as the expected loss value and the model parameter count may also be referred to as dependent variable parameters, and a planning parameter used to determine the dependent variable parameter is referred to as an independent variable parameter. A planning parameter that can be directly configured in the planning parameters may be referred to as a configurable parameter. Usually, the user may modify the configurable parameter.

In some embodiments, the first training configuration information includes values of a plurality of planning parameters, the second training configuration information also includes values of a plurality of planning parameters, and a value of at least one configurable parameter in the planning parameters has been modified by the user. In other words, the user modifies the value of the at least one configurable parameter in the first training configuration information, and the cloud platform modifies the value of the at least one configurable parameter in response to the modification operation of the user.

In some embodiments, the configurable parameter may be at least one of the model iteration quantity of the corresponding training phase, the learning rate interval, the warm-up iteration quantity, the learning rate decay type, the parameter precision, the batch size, and the random drop out rate, the quantity of self-attention networks in the network model of the corresponding training phase, the dimension of the hidden layer in each self-attention network, the quantity of attention heads, the proportion of the training data set of the corresponding training phase in the total training data set, the configuration information of the pruning, and the configuration information of the distillation preheating.

During actual application, the configurable parameter may alternatively be the quantity of the training phases of the target network model.

Optionally, the configuration preview user interface further includes a phase adding button and a phase deleting button. The user can add a training phase by triggering the phase adding button, and delete a training phase by triggering the phase deleting button, to modify the quantity of the training phases.

For example, the phase adding button includes an adding button corresponding to each training phase, and the phase deleting button includes a deleting button corresponding to each training phase. In this case, a training phase added by triggering an adding button corresponding to a corresponding training phase is a next training phase adjacent to the training phase corresponding to the adding button, and a training phase deleted by triggering an adding button corresponding to a corresponding training phase is a training phase corresponding to the deleting button.

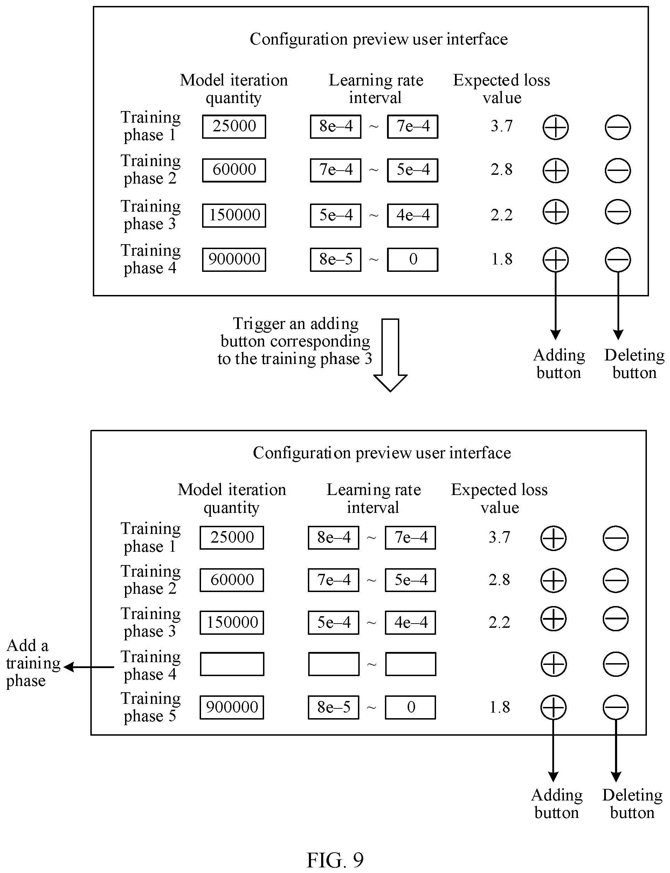

For example, FIG. 9 is a diagram of a configuration preview user interface according to an embodiment of this application. The configuration preview user interface includes model iteration quantities, learning rate intervals, and expected loss values of a training phase 1 to a training phase 4, and an adding button and a deleting button that correspond to each of the training phase 1 to the training phase 4. A user adds a training phase by triggering the adding button corresponding to the training phase 3. In this case, training phases of the target network model includes the training phase 1 to a training phase 5.

It should be noted that if the user modifies the first training configuration information, it indicates that the user has experience in network model training. Therefore, after training phase addition or deletion, the user further needs to reconfigure, based on experience of the user, values of other configurable parameters corresponding to a plurality of training phases. In this case, the at least one configurable parameter modified by the user includes a quantity of the training phases, and further includes a configurable parameter that is reconfigured by the user other than a quantity of the plurality of training phases.

During actual application, after the quantity of the training phases is modified, in addition to reconfiguring, by the user, the configurable parameters corresponding to the plurality of training phases after the training phase addition or deletion, the quantity of training phases after the addition or deletion, and the parameter count and the type of the target network model may be input to a training prediction model, to obtain values that are of configurable parameters corresponding to each of the plurality of training phases and that are output by the training prediction model.

In some embodiments, an implementation process of determining the training configuration information of the target network model based on the second training configuration information includes: If the at least one configurable parameter modified by the user includes an independent variable parameter, a value of a corresponding dependent variable parameter is re-determined based on a modified value of the independent variable parameter; and the value of the at least one configurable parameter, the re-determined value of the dependent variable parameter, and a value of a configurable parameter other than the at least one configurable parameter included in the first training configuration information are determined as the training configuration information of the target network model. If the at least one configurable parameter modified by the user includes no independent variable parameter, the value of the at least one configurable parameter and a value of a planning parameter other than the at least one configurable parameter included in the first training configuration information are determined as the training configuration information of the target network model.

**Step 304:** Train the target network model based on the configuration information of the plurality of training phases.

The following describes, by using step (1) to step (4), an implementation process of training the target network model based on the configuration information of the plurality of training phases.

**Step (1):** Set i to 1, and determine an i^{th} network model based on configuration information of an i^{th} training phase of the plurality of training phases.

In some embodiments, if the i^{th} training phase is the 1^{st} training phase of the plurality of training phases, the i^{th} network model is generated based on the configuration information of the i^{th} training phase; or if the i^{th} training phase is not the 1^{st} training phase, a trained (i-1)^{th} network model is expanded based on the configuration information of the i^{th} training phase, to obtain the i^{th} network model.

If the i^{th} training phase is the 1^{st} training phase of the plurality of training phases, an implementation process of generating the i^{th} network model based on the configuration information of the i^{th} training phase includes: A model structure of a 1^{st} network model is determined based on model planning information of the 1^{st} training phase, and an initial value of a parameter of the 1^{st} network model is determined based on the configuration information of the distillation preheating, to obtain the 1^{st} network model.

In some embodiments, the configuration information of the distillation preheating indicates to perform distillation preheating on the network model. In this case, before the 1^{st} training phase is input, distillation preheating may be performed on the 1^{st} network model, to determine the initial value of the parameter of the 1^{st} network model.

If the configuration information of the distillation preheating indicates not to perform distillation preheating on the 1^{st} network model, the initial value of the parameter of the 1^{st} network model may be determined according to a random initialization method. Certainly, during actual application, the initial value of the parameter of the 1^{st} network model may be determined according to another method. This is not limited in embodiments of this application.

In some embodiments, the configuration information of the i^{th} training phase includes model planning information of the i^{th} training phase. In this case, an implementation process of expanding the trained (i-1)^{th} network model based on the configuration information of the i^{th} training phase, to obtain the i^{th} network model includes: A parameter expansion user interface is provided, where the parameter expansion user interface indicates the user to select a parameter expansion policy, the parameter expansion policy is used to determine an initial value of a parameter newly added to the i^{th} network model relative to the (i-1)^{th} network model; the parameter expansion policy is obtained from the parameter expansion user interface; and parameter expansion is performed on the (i-1)^{th} network model based on the parameter expansion policy and the model planning information of the i^{th} training phase, to obtain the i^{th} network model.

Optionally, the parameter expansion user interface further includes a recommended parameter expansion policy. In this case, after the cloud platform displays the recommended parameter expansion policy on the parameter expansion user interface, the user can use the recommended parameter expansion policy as a selected parameter expansion policy, or select a parameter expansion policy other than the recommended parameter expansion policy.

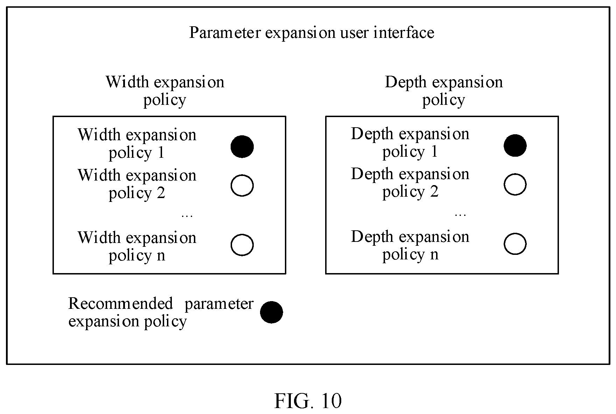

For example, refer to FIG. 10. The parameter expansion user interface includes a recommended parameter expansion policy, and the recommended parameter expansion policy is a width expansion policy 1 and a depth expansion policy 1. The user can directly use the recommended parameter expansion policy as the selected parameter expansion policy.

In some embodiments, the cloud platform can store the recommended parameter expansion policy. In this case, the cloud platform can directly obtain the recommended parameter expansion policy.

In some other embodiments, the cloud platform can input the configuration information of the plurality of training phases and indication information of a user interaction operation into the training prediction model, to obtain a recommended parameter expansion policy output by the training prediction model. The indication information of the user interaction operation can represent an operation performed by the user on the cloud platform. The operation may be an operation of modifying the first training configuration information by the user, may be an operation of modifying the training evaluation result by the user, or the like. The operation of modifying the training evaluation result by the user is described below, and details are not described herein.

During actual application, in addition to selecting the parameter expansion policy from the parameter expansion user interface, the parameter expansion policy may alternatively be preset and stored in the cloud platform. In this way, the user does not need to select the parameter expansion policy, and the cloud platform can directly obtain the parameter expansion policy.

In some embodiments, the parameter expansion policy includes a width expansion policy and a depth expansion policy. The width expansion policy indicates a manner of determining an initial value of a parameter of a newly added dimension of the hidden layer in the self-attention network. The depth expansion policy is a manner of determining an initial value of a parameter in a self-attention network newly added to the i^{th} network model relative to the (i-1)^{th} network model. In this case, an implementation process of performing parameter expansion on the (i-1)^{th} network model based on the parameter expansion policy and the model planning information of the i^{th} training phase includes: A dimension of a hidden layer in each self-attention network in the (i-1)^{th} network model is expanded based on the width expansion policy and the model planning information of the i^{th} training phase, to obtain an initial expanded model; and a self-attention network of the initial expanded model is expanded based on the depth expansion policy and the model planning information of the i^{th} training phase, to obtain the i^{th} network model.

An implementation process of expanding the dimension of the hidden layer in each self-attention network in the (i-1)^{th} network model based on the width expansion policy and the model planning information of the i^{th} training phase, to obtain the initial expanded model includes: An initial value of a parameter of a neuron newly added to a hidden layer in each self-attention network in the initial expanded model relative to the (i-1)^{th} network model is determined based on a value of a parameter of a neuron at the hidden layer in each self-attention network in the (i-1)^{th} network model and the width expansion policy, where a dimension of the hidden layer in each self-attention network in the initial expanded model is the same as a dimension of a hidden layer in each self-attention network in the network model of the i^{th} training phase, and a quantity of self-attention networks in the initial expanded model is the same as a quantity of self-attention networks in the (i-1)^{th} network model.

For a parameter of a target dimension in the newly added dimension, the width expansion policy may be performing weighted averaging on values of parameters of neurons at hidden layers in all the self-attention networks in the (i-1)^{th} network model, to obtain an initial value of a parameter of a target neuron, where the target neuron is any neuron in newly added neurons. Certainly, during actual application, the width expansion policy may alternatively be another algorithm. For example, an average value of the values of the parameters of the neurons at the hidden layers in all the self-attention networks in the (i-1)^{th} network model is determined as the initial value of the parameter of the target neuron. This is not limited in embodiments of this application.

An implementation process of expanding the self-attention network of the initial expanded model based on the depth expansion policy and the model planning information of the i^{th} training phase, to obtain the i^{th} network model includes: An initial value of a parameter in a self-attention network newly added to the i^{th} network model relative to the initial expanded model is determined based on a value of a parameter in the self-attention network in the initial expanded model and the depth expansion policy, where a dimension of a hidden layer in the self-attention network in the i^{th} network model is the same as the dimension of the hidden layer in each self-attention network in the network model of the i^{th} training phase, and a quantity of self-attention networks in the i^{th} network model is the same as a quantity of self-attention networks in the i^{th} network model.

For any parameter in any newly added self-attention network, the depth expansion policy may be using, as an initial value of the parameter, a value of a parameter that is in any self-attention network in the initial expanded model and that has a same position as the parameter. Certainly, during actual application, the depth expansion policy may alternatively be another algorithm. For example, an average value of all parameters that are in the self-attention networks in the initial expanded model and that have same positions as the parameter is used as the initial value of the parameter. This is not limited in embodiments of this application.

**Step (2):** Train the i^{th} network model based on the configuration information of the i^{th} training phase, to obtain a trained i^{th} network model.

In some embodiments, before training the i^{th} network model based on the configuration information of the i^{th} training phase, to obtain the trained i^{th} network model, the user can further trigger a training start operation, and the cloud platform can further train the i^{th} network model based on the configuration information of the i^{th} training phase in response to the training start operation triggered by the user.

For example, before the i^{th} network model is trained based on the configuration information of the i^{th} training phase, a first training execution user interface may be displayed, and the user can trigger the training start operation on the first training execution user interface.

In some embodiments, in a process of training the i^{th} network model based on the configuration information of the i^{th} training phase, the user can further trigger a training pause operation, and the cloud platform can further pause training in the i^{th} training phase in response to the training pause operation triggered by the user.

Optionally, in a process of training the i^{th} network model based on the configuration information of the i^{th} training phase, the user can further trigger a training stop operation, and the cloud platform can further stop training in the i^{th} training phase in response to the training stop operation triggered by the user.

For example, in a process of training the i^{th} network model based on the configuration information of the i^{th} training phase, a second training execution user interface may be displayed, and the user can trigger a training pause operation or a training stop operation on the second training execution user interface.

In some embodiments, in a process of training the i^{th} network model based on the configuration information of the i^{th} training phase, a third training execution user interface may be further displayed, and the third training execution user interface includes a training log of the i^{th} training phase.

Optionally, the training log includes a model iteration quantity, a loss function, variations of a model parameter, and the like of the network model in a training process.

Optionally, the third training execution user interface further includes a computation amount reduction status, and the computation amount reduction status indicates a computation amount reduced when a same training effect is achieved in embodiments of this application in comparison with a related model training technology.

Optionally, the third training execution user interface further includes training configuration information of the i^{th} training phase.

It should be noted that the first training execution user interface, the second training execution user interface, and the third training execution user interface may be a same user interface; any two of the first training execution user interface, the second training execution user interface, and the third training execution user interface are a same user interface; or the first training execution user interface, the second training execution user interface, and the third training execution user interface are different user interfaces. This is not limited in embodiments of this application.

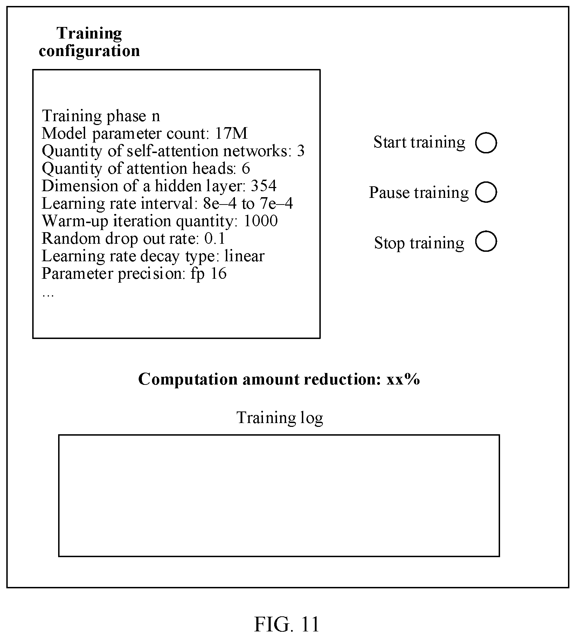

For example, refer to FIG. 11. The first training execution user interface, the second training execution user interface, and the third training execution user interface may be a same user interface. Before training an n^{th} network model based on configuration information of an n^{th} training phase, the user can trigger a training start operation on the user interface, and in a process of training the n^{th} network model based on the configuration information of the n^{th} training phase, the user can trigger a training pause operation or a training stop operation. The user interface can further display a training configuration, a training log, and a computation amount reduction status of the n^{th} training phase.

**Step (3):** Determine a training evaluation result of the trained i^{th} network model, and provide a training evaluation user interface, where the training evaluation user interface includes the training evaluation result of the trained i^{th} network model, and the training evaluation user interface further indicates the user to determine whether training of the trained i^{th} network model is completed.

In some embodiments, a loss curve of the i^{th} network model is determined, where the loss curve indicates variations of a loss value with a model iteration quantity, and the loss value indicates a difference between a predicted value and a real value of the network model; at least one test data set is input into the trained i^{th} network model, to obtain an inference result that is of the at least one test data set and that is output by the trained i^{th} network model, and the training evaluation result of the trained i^{th} network model is determined based on the loss curve and the inference result of the at least one test data set.

Optionally, in a process of training the i^{th} network model, the cloud platform can record the variations of the loss value of the i^{th} network model with the model iteration quantity. In this way, the cloud platform can draw the loss curve of the i^{th} network model based on the variations of the loss value of the i^{th} network model with the model iteration quantity.

In some embodiments, an implementation process of determining the training evaluation result of the trained i^{th} network model based on the loss curve and the inference result of the at least one test data set includes: An inference accuracy rate corresponding to each of the at least one test data set is determined based on the inference result of the at least one test data set, and the training evaluation result of the trained i^{th} network model is determined based on the inference accuracy rate corresponding to each of the at least one test data set, the loss curve of the i^{th} network model, and an expected loss value of the i^{th} training phase.

For any test data set of the at least one test data set, a proportion of data that is correctly inferred in an inference result of the test data set in the test data set is counted, to obtain an inference accuracy rate corresponding to the test data set. Each test data set of the at least one test data set is processed in a same manner, so that an inference accuracy rate corresponding to each test data set can be obtained.

Optionally, the training evaluation result includes a loss value prediction evaluation result and a test set prediction evaluation result, the loss value prediction evaluation result indicates whether the cloud platform predicts whether the loss value of the i^{th} network model meets an expected prediction, and the test set prediction evaluation result indicates whether the cloud platform predicts whether the inference result of the at least one test data set meets the expected prediction. In this case, the inference accuracy rate corresponding to each of the at least one test data set, the loss curve of the i^{th} network model, and the expected loss value of the i^{th} training phase are input into the training prediction model, to obtain the loss value prediction evaluation result and the test set prediction evaluation result that are output by the training prediction model.

Optionally, the training evaluation result further includes training completion prediction information, and the training completion prediction information indicates prediction performed by the cloud platform on whether the training of the trained i^{th} network model is completed. In this case, the inference accuracy rate corresponding to each of the at least one test data set, the loss curve of the i^{th} network model, and the expected loss value of the i^{th} training phase are input into the training prediction model, to obtain the training completion prediction information that is of the i^{th} training phase and that is output by the training prediction model.

The training evaluation result further includes the prediction performed by the cloud platform on whether the training of the trained i^{th} network model is completed. In this way, reliable training completion prediction information can be provided for a user without training experience, and the training efficiency of the network model can be improved.

In some embodiments, the training evaluation user interface further includes at least one of the loss curve of the i^{th} network model and the inference accuracy rate corresponding to each of the at least one test data set. In this way, the user can determine, based on the loss curve of the i^{th} network model and/or the inference accuracy rate corresponding to each of the at least one test data set, and the training evaluation result, whether the training of the trained i^{th} network model is completed.

The training evaluation user interface further includes at least one of the loss curve of the i^{th} network model and the inference accuracy rate corresponding to each of the at least one test data set. In other words, a training evaluation result of a network model obtained in each training phase is presented to the user in real time through the training evaluation user interface. In this way, a training effect of each training phase can be controlled, so that the user discovers a possible existing problem in a training process in a timely manner, and the network model training efficiency is improved.

During actual application, after the training evaluation user interface is provided, the training evaluation result may be further modified in response to an operation of modifying the training evaluation result by the user, to obtain a modified training evaluation result.

Optionally, the training evaluation user interface includes the loss curve of the i^{th} network model, the inference accuracy rate corresponding to each of the at least one test data set, and the training evaluation result. In this case, the user can determine, based on the loss curve of the i^{th} network model and the inference accuracy rate corresponding to each of the at least one test data set, whether the training of the i^{th} network model meets an expectation, to obtain a training evaluation result of the user. If the training evaluation result of the user is inconsistent with the training evaluation result, the user can modify the training evaluation result. The cloud platform modifies the training evaluation result in response to an operation of modifying the training evaluation result by the user, to obtain a modified training evaluation result. If the training evaluation result of the user is consistent with the training evaluation result, the user does not modify the training evaluation result.

Optionally, the user evaluation result includes a loss value user evaluation result and a test set user evaluation result, the loss value user evaluation result indicates whether the loss value of the i^{th} network model meets an expectation of the user, the test set user evaluation result indicates whether the inference accuracy rate corresponding to each of the at least one test data set meets the expectation of the user, and the training evaluation result includes the loss value prediction evaluation result and the test set prediction evaluation result. In this case, the user can determine the loss value user evaluation result based on the loss curve of the i^{th} network model, and determine the test set user evaluation result based on the inference accuracy rate corresponding to each of the at least one test data set. If the loss value user evaluation result is inconsistent with the loss value prediction evaluation result, the user can modify the loss value prediction evaluation result. In response to an operation of modifying the loss value prediction evaluation result by the user, the cloud platform modifies the loss value prediction evaluation result, to obtain a modified loss value prediction evaluation result. If the loss value user evaluation result is consistent with the loss value prediction evaluation result, the user does not modify the loss value prediction evaluation result. If the test set user evaluation result is inconsistent with the test set prediction evaluation result, the user can modify the test set prediction evaluation result. In response to the operation of modifying the test set prediction evaluation result by the user, the cloud platform modifies the test set prediction evaluation result, to obtain a modified test set prediction evaluation result. If the test set user evaluation result is consistent with the test set prediction evaluation result, the user does not need to modify the test set prediction evaluation result.

For example, if the loss value prediction evaluation result is that the loss value meets the expectation, the test set prediction evaluation result is that a test set inference accuracy rate meets the expectation, the loss value user evaluation result is that the loss value meets the expectation, and the test set user evaluation result is that the test set inference accuracy rate does not meet the expectation. In this case, because the test set user evaluation result is inconsistent with the test set prediction evaluation result, the user modifies the test set prediction evaluation result to that the test set inference accuracy rate does not meet the expectation. In response to the operation of modifying the test set prediction evaluation result by the user, the cloud platform modifies the test set prediction evaluation result, to obtain a modified test set prediction evaluation result.

**Step (4):** If a training completion operation triggered by the user and that the i^{th} training phase is not the last training phase of the plurality of training phases are detected, set i=i+1, and return to the step of determining the i^{th} submodel based on the configuration information of the i^{th} training phase of the plurality of training phases; or if the training completion operation triggered by the user and that the i^{th} training phase is the last training phase of the plurality of training phases are detected, the trained i^{th} network model is used as a trained target network model.

In some embodiments, when determining that the training of the trained i^{th} network model is completed, the user can trigger a training completion operation on the training evaluation user interface. In this case, when detecting the training completion operation triggered by the user and that the i^{th} training phase is not the last training phase of the plurality of training phases, the cloud platform sets i=i+1, and returns to the step of determining the i^{th} submodel based on the configuration information of the i^{th} training phase of the plurality of training phases; or when the i^{th} training phase is the last training phase of the plurality of training phases, the trained i^{th} network model is used as the trained target network model.

In some other embodiments, when determining that the training of the trained i^{th} network model is not completed, the user can trigger a training continue operation or a re-planning operation on the training evaluation user interface. The training continue operation indicates to continue training the i^{th} network model, and the re-planning operation indicates to return to the step of determining training configuration information of the target network model, to re-determine training configuration information of the target network model. If the user triggers the training continue operation, the cloud platform detects the training continue operation triggered by the user, and continues training the i^{th} network model based on the configuration information of the i^{th} training phase. If the user triggers the re-planning operation, the cloud platform returns to the step of determining the training configuration information of the target network model, to re-determine the training configuration information of the target network model.

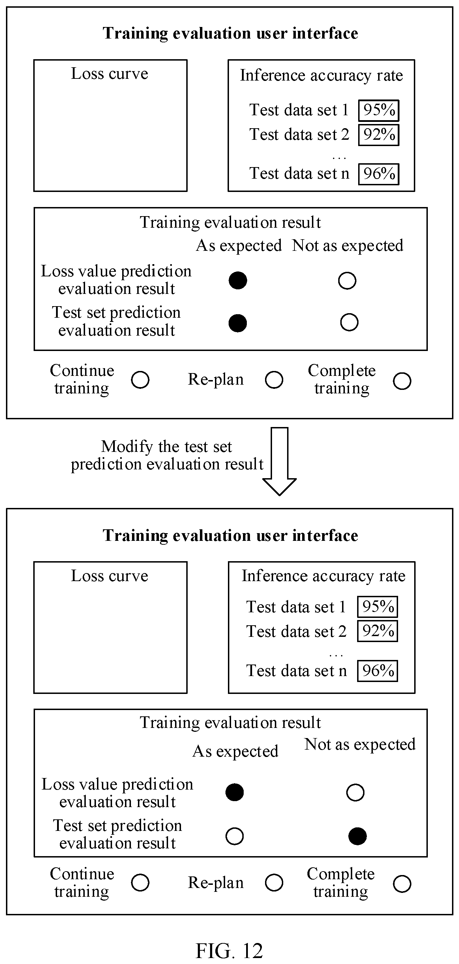

For example, refer to FIG. 12. A training evaluation user interface includes a loss curve of a 1^{st} network model (not shown in FIG. 12), and an inference accuracy rate and a training evaluation result that correspond to each of test data sets 1 to n. The loss value prediction evaluation result is that the loss value meets the expectation. The test set prediction evaluation result is that the test set inference accuracy rate meets the expectation. The loss value user evaluation result is that the loss value meets the expectation. The test set user evaluation result is that the test set inference accuracy rate does not meet the expectation. In this case, because the test set user evaluation result is inconsistent with the test set prediction evaluation result, the user modifies the test set prediction evaluation result to that the test set inference accuracy rate does not meet the expectation. In response to the operation of modifying the test set prediction evaluation result by the user, the cloud platform modifies the test set prediction evaluation result to obtain a modified test set prediction evaluation result.

Certainly, after the trained i^{th} network model is obtained, the training the target network model by interacting with the user is merely an implementation. During actual application, the target network model may be trained without interacting with the user. In other words, i=1 is set, the i^{th} network model is determined based on the configuration information of the i^{th} training phase of the plurality of training phases, and the i^{th} network model is trained based on the configuration information of the i^{th} training phase, to obtain the trained i^{th} network model. If the i^{th} training phase is not the last training phase of the plurality of training phases, i=i+1 is set, and the step of determining the i^{th} submodel based on the configuration information of the i^{th} training phase of the plurality of training phases is returned; or if the i^{th} training phase is the last training phase of the plurality of training phases, the trained i^{th} network model is used as the trained target network model.

For a detailed implementation process of determining the i^{th} network model based on the configuration information of the i^{th} training phase of the plurality of training phases, refer to the foregoing related content. Details are not described herein again.

During actual application, after the training completion operation triggered by the user and that the i^{th} training phase is not the last training phase of the plurality of training phases are detected, configuration information of at least one training phase that follows the i^{th} training phase among the plurality of training phases may be further optimized. There are a plurality of implementations for optimizing the configuration information of the at least one training phase that follows the i^{th} training phase among the plurality of training phases. The following describes two implementations.

**In a first implementation,** the configuration information of the at least one training phase that follows the i^{th} training phase among the plurality of training phases is optimized based on at least one of the loss curve of the i^{th} network model and the inference result of the at least one test data set.

In some embodiments, at least one of the loss curve and the inference result of the at least one test data set is input into the training prediction model, to obtain optimized configuration information that is of the at least one training phase after the i^{th} training phase and that is output by the training prediction model, so as to optimize the configuration information of the at least one training phase after the i^{th} training phase.

In some other embodiments, after the training evaluation user interface is provided, the training evaluation result may be further modified in response to an operation of modifying the training evaluation result by the user, to obtain a modified training evaluation result. In this case, the configuration information of the at least one training phase that follows the i^{th} training phase among the plurality of training phases is optimized based on the training evaluation result before the modification, the modified training evaluation result, and at least one of the loss curve of the i^{th} network model and the inference result of the at least one test data set.

During actual application, the training evaluation result determined by the cloud platform may not meet an expectation of the user. In this case, the user can modify the training evaluation result. In this way, the cloud platform can adjust configuration information of a subsequent training phase in a timely manner based on interaction between the user and the cloud platform, a loss curve, and an inference result of a test data set, so that a finally trained network model better meets the expectation of the user.

For a detailed implementation process of modifying the training evaluation result in response to the operation of modifying the training evaluation result by the user, to obtain the modified training evaluation result, refer to the foregoing related content. Details are not described herein again.

In some embodiments, the cloud platform inputs the training evaluation result before the modification, the modified training evaluation result, and at least one of the loss curve of the i^{th} network model and the inference result of the at least one test data set into the training prediction model, to obtain the optimized configuration information that is of the at least one training phase after the i^{th} training phase and that is output by the training prediction model, so as to optimize the configuration information of the at least one training phase after the i^{th} training phase.

During actual application, after obtaining the trained i^{th} network model, the cloud platform may further perform forgetting evaluation on the trained i^{th} network model to obtain a forgetting evaluation result. The forgetting evaluation result indicates inference performance of the trained i^{th} network model on a training data set of a historical training phase, and the historical training phase is a training phase preceding the i^{th} training phase among the plurality of training phases. In this case, if it is determined, based on the forgetting evaluation result, that an inference accuracy rate of at least one historical training phase is not greater than an accuracy rate threshold, the configuration information of the at least one training phase that follows the i^{th} training phase among the plurality of training phases is optimized based on the training evaluation result before the modification, the modified training evaluation result, the forgetting evaluation result, and at least one of the loss curve of the i^{th} network model and the inference result of the at least one test data set. Otherwise, the configuration information of the at least one training phase that follows the i^{th} training phase among the plurality of training phases is optimized based on the training evaluation result before the modification, the modified training evaluation result, and at least one of the loss curve and the inference result of the at least one test data set.

An implementation process of performing forgetting evaluation on the trained i^{th} network model to obtain a forgetting evaluation result includes: An inference accuracy rate of at least one target historical data set is determined, where the at least one target historical data set corresponds one to one to the at least one historical training phase, and the target historical data set is a part or all of a training data set of a corresponding historical training phase; and the forgetting evaluation result of the trained i^{th} network model is determined based on the inference accuracy rate of the at least one target historical data set.

Optionally, a target historical data set corresponding to a target historical training phase is input into the trained i^{th} network model, to obtain an inference result of the i^{th} network model for the target historical data set, where the target historical training phase is any training phase of the at least one historical training phase; and a proportion of data that is correctly inferred in the inference result of the target historical data set in the target historical data set is counted, to obtain an inference accuracy rate of the target historical data set. The at least one historical training phase is processed in a same manner, so that the inference accuracy rate of the at least one target historical data set can be obtained.

In some embodiments, the forgetting evaluation result is not forgotten or forgotten, not forgotten indicates that there is at least one historical training phase whose inference accuracy rate is not greater than the accuracy rate threshold, and forgotten indicates that there is at least one historical training phase whose inference accuracy rate is not greater than the accuracy rate threshold. In this case, if there is at least one historical training phase whose inference accuracy rate is not greater than the accuracy rate threshold in an inference accuracy rate corresponding to each of the at least one target historical data set, it is determined that the forgetting evaluation result is forgotten; or if there is no at least one historical training phase whose inference accuracy rate is not greater than the accuracy rate threshold in an inference accuracy rate corresponding to each of the at least one target historical data set, it is determined that the forgetting evaluation result is not forgotten.

It should be noted that, when the forgetting evaluation result is forgotten, the forgetting evaluation result further includes configuration information of a forgotten training phase, and the forgotten training phase is a historical training phase that is in the at least one historical training phase and whose inference accuracy rate is not greater than the accuracy rate threshold.

Optionally, the training evaluation result before the modification, the modified training evaluation result, the forgetting evaluation result, and at least one of the loss curve of the i^{th} network model and the inference result of the at least one test data set may be input into the training prediction model, to obtain the optimized configuration information that is of the at least one training phase after the i^{th} training phase and that is output by the training prediction model, so as to optimize the configuration information of the at least one training phase after the i^{th} training phase.

For a detailed implementation method for optimizing, based on the training evaluation result before the modification, the modified training evaluation result, and at least one of the loss curve of the i^{th} network model and the inference result of the at least one test data set, the configuration information of the at least one training phase that follows the i^{th} training phase among the plurality of training phases, refer to the foregoing related content. Details are not described herein again.

It should be noted that when the forgetting evaluation result of the trained i^{th} network model indicates that there is at least one historical training phase whose inference accuracy rate is not greater than the accuracy rate threshold, it indicates that an accuracy rate of inference performed by the trained i^{th} network model on the training data set of the historical training phase is low, and a forgetting phenomenon exists. Therefore, a training data set corresponding to the at least one training phase after the i^{th} training phase includes a part or all of a training data set of a forgotten training phase. In this way, it can be ensured that a data set of the forgotten training phase is reviewed in a subsequent training phase, so that inference performance of the target network model is improved.

**In a second implementation,** after the trained i^{th} network model is obtained, forgetting evaluation is performed on the trained i^{th} network model, to obtain a forgetting evaluation result. In this case, if it is determined, based on the forgetting evaluation result, that an inference accuracy rate of at least one historical training phase is not greater than an accuracy rate threshold, the configuration information of the at least one training phase that follows the i^{th} training phase among the plurality of training phases is optimized based on at least one of the forgetting evaluation result, the loss curve of the i^{th} network model, and the inference result of the at least one test data set. Otherwise, the configuration information of the at least one training phase that follows the i^{th} training phase among the plurality of training phases is optimized based on at least one of the loss curve of the i^{th} network model and the inference result of the at least one test data set.

For a detailed implementation process of performing forgetting evaluation on the trained i^{th} network model, refer to the foregoing related content. Details are not described herein again.

In some embodiments, the forgetting evaluation result and at least one of the loss curve of the i^{th} network model and the inference result of the at least one test data set are input into the training prediction model, to obtain the optimized configuration information that is of the at least one training phase after the i^{th} training phase and that is output by the training prediction model, so as to optimize the configuration information of the at least one training phase after the i^{th} training phase.

For a detailed implementation process of optimizing, based on at least one of the loss curve of the i^{th} network model and the inference result of the at least one test data set, the configuration information of the at least one training phase that follows the i^{th} training phase among the plurality of training phases, refer to the foregoing descriptions. Details are not described herein again.

In some embodiments, if the training completion operation triggered by the user and that the i^{th} training phase is the last training phase of the plurality of training phases are detected, the trained i^{th} network model is directly used as the trained target network model.

During actual application, after the trained i^{th} network model is obtained, the cloud platform may further perform forgetting evaluation on the trained i^{th} network model to obtain a forgetting evaluation result. In this case, if the training completion operation triggered by the user and that the i^{th} training phase is the last training phase of the plurality of training phases are detected, and it is determined, based on the forgetting evaluation result, that there is no at least one historical training phase whose inference accuracy rate is not greater than the accuracy rate threshold, the trained i^{th} network model is used as the trained target network model.

In some embodiments, if the training completion operation triggered by the user and that the i^{th} training phase is the last training phase of the plurality of training phases are detected, and it is determined, based on the forgetting evaluation result, that there is at least one historical training phase whose inference accuracy rate is not greater than the accuracy rate threshold, the training of the trained i^{th} network model is continued based on the forgetting evaluation result, to obtain a continuously trained i^{th} network model, the continuously trained i^{th} network model is used as the trained i^{th} network model, and the step of performing forgetting evaluation on the trained i^{th} network model to obtain the forgetting evaluation result is returned.

During actual application, the cloud platform can further display a training record user interface, and the user can view configuration information and a training record of any training phase on the training record user interface. The training record includes a training status of a network model of each training phase.

For example, the training status may include a loss curve corresponding to any training phase, an inference accuracy rate corresponding to each of at least one test data set, and a training log. This is not limited in embodiments of this application.

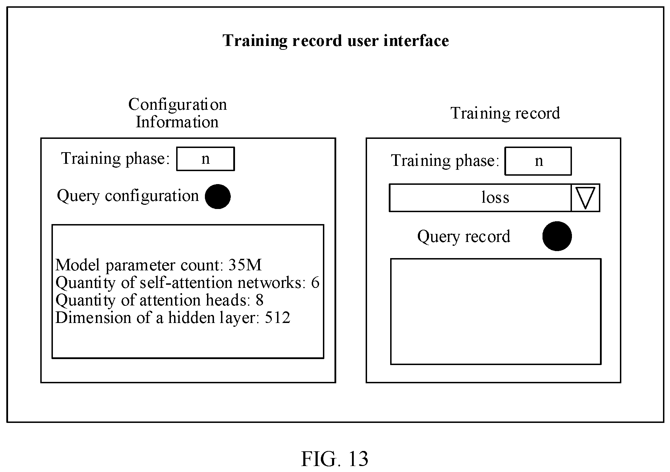

For example, FIG. 13 is a diagram of a training record user interface according to an embodiment of this application. A user views configuration information and a loss curve (not shown in FIG. 13) of a training phase n on the training record user interface. A model parameter count in the configuration information of the training phase n is 35 M, in a network model of the training phase n, a quantity of self-attention networks is 6, a dimension of a hidden layer in each self-attention network is 512, and a quantity of attention heads is 8.

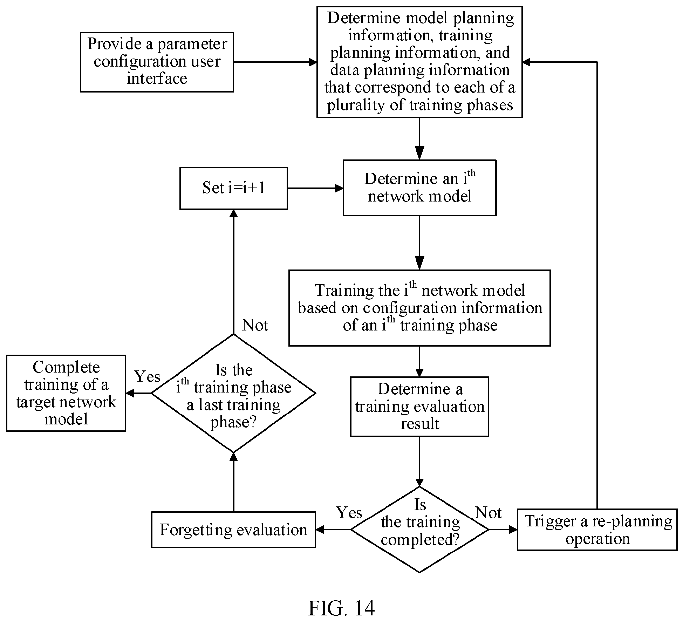

The following describes the network model training method provided in embodiments of this application again with reference to FIG. 14.

Refer to FIG. 14. A parameter configuration user interface is provided, a parameter count and a type of a target network model are obtained from the parameter configuration user interface, and the parameter count and the type of the target network model are input into a training prediction model, to obtain first training configuration information output by the training prediction model. Training configuration information of the target network model is determined based on the first training configuration information. A cloud platform provides a configuration preview user interface, modifies the first training configuration information in response to an operation of modifying the first training configuration information by a user, to obtain second training configuration information, and determines, based on the second training configuration information, model planning information, training planning information, and data planning information that correspond to each of a plurality of training phases.

i=1 is set. If an i^{th} training phase is a 1^{st} training phase of the plurality of training phases, an i^{th} network model is generated based on configuration information of the i^{th} training phase; or if an i^{th} training phase is not a 1^{st} training phase, a trained (i-1)^{th} network model is expanded based on configuration information of the i^{th} training phase, to obtain an i^{th} network model.

The i^{th} network model is trained based on the configuration information of the i^{th} training phase, to obtain a trained i^{th} network model, a training evaluation result of the trained i^{th} network model is determined, and a training evaluation user interface is provided. When determining that training of the trained i^{th} network model is not completed, the user can trigger a re-planning operation, return to the step of determining the training configuration information of the target network model, and re-determine the training configuration information of the target network model.

When determining that training of the trained i^{th} network model is completed, the user can trigger a training completion operation on the training evaluation user interface. When detecting the training completion operation triggered by the user and that the i^{th} training phase is not a last training phase of the plurality of training phases, the cloud platform sets i=i+1, and returns to the step of determining the i^{th} submodel based on the configuration information of the i^{th} training phase of the plurality of training phases; in addition, after obtaining the trained i^{th} network model, the cloud platform may further perform forgetting evaluation on the trained i^{th} network model to obtain a forgetting evaluation result. If it is determined, based on the forgetting evaluation result, that an inference accuracy rate of at least one historical training phase is not greater than an accuracy rate threshold configuration information of at least one training phase that follows the i^{th} training phase among the plurality of training phases is optimized based on the training evaluation result before modification, a modified training evaluation result, a forgetting evaluation result, and at least one of a loss curve of the i^{th} network model and an inference result of at least one test data set. Otherwise, the configuration information of the at least one training phase that follows the i^{th} training phase among the plurality of training phases is optimized based on the training evaluation result before the modification, the modified training evaluation result, and at least one of the loss curve of the i^{th} network model and the inference result of the at least one test data set.

When the i^{th} training phase is the last training phase of the plurality of training phases, the cloud platform may perform forgetting evaluation on the trained i^{th} network model after obtaining the trained i^{th} network model, to obtain a forgetting evaluation result. If it is determined, based on the forgetting evaluation result, that there is no at least one historical training phase whose inference accuracy rate is not greater than the accuracy rate threshold, the trained i^{th} network model is used as a trained target network model, that is, training of the target network model is completed.

In this embodiment of this application, the user can input the parameter count and the type of the target network model on the parameter configuration user interface, to determine the training configuration information of the target network model based on the parameter count and the type of the target network model. In this way, corresponding training configuration information can be determined, in a targeted manner, for network models that are with different parameter quantities and that are of different types, so that the parameter count of the model and the type of the model are more adaptive to the determined training configuration information. In addition, in this embodiment of this application, a training process of a network model with a large parameter count can be further divided into a plurality of phases, and model parameter counts of the plurality of training phases increase sequentially in a training sequence. In this way, fine-grained phase-wise control on the network model training can be implemented. In addition, because the parameter count of the network model gradually increases with the training phase, a convergence speed of the network model can be effectively accelerated, a computation amount required for the network model training can be reduced, and training costs of the network model can be reduced.

The training evaluation result in this embodiment of this application further includes a prediction performed by the cloud platform on whether the training of the trained i^{th} network model is completed. In this way, reliable training completion prediction information can be provided for a user without training experience, and training efficiency of the network model can be improved. When the training evaluation user interface further includes the loss curve of the i^{th} network model and/or an inference accuracy rate corresponding to each of the at least one test data set, a training evaluation result of a network model obtained in each training phase can be presented to the user in real time through the training evaluation user interface. In this way, the user can control a training effect of each training phase, so that the user discovers a possible existing problem in a training process in a timely manner, and the network model training efficiency is improved. During actual application, the training evaluation result determined by the cloud platform may not meet an expectation of the user. In this case, the user can modify the training evaluation result. In this way, the cloud platform can adjust configuration information of a subsequent training phase in a timely manner based on interaction between the user and the cloud platform, a loss curve, and an inference result of a test data set, so that a finally trained network model better meets the expectation of the user.

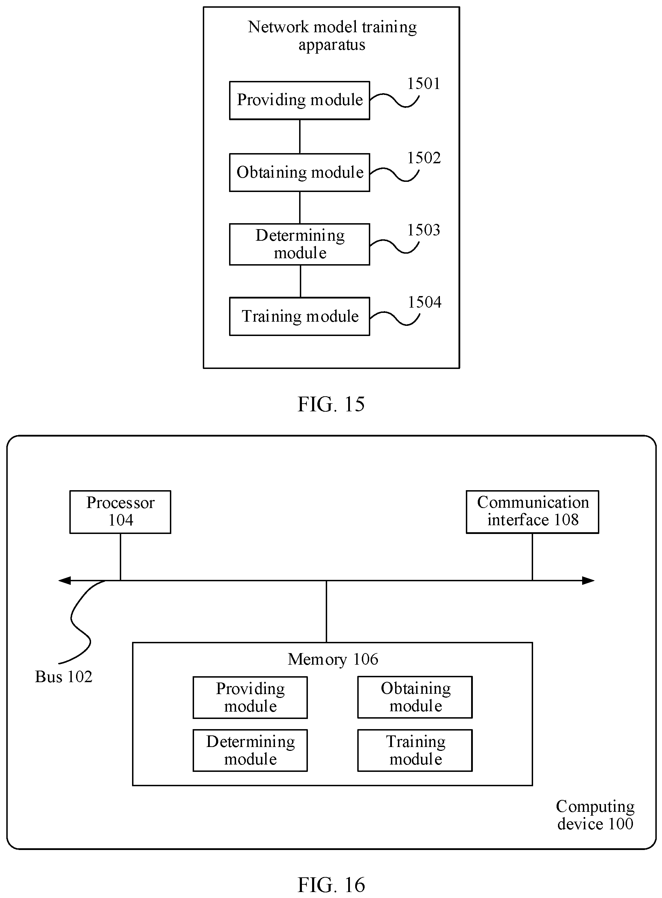

FIG. 15 is a diagram of a structure of a network model training apparatus according to an embodiment of this application. The network model training apparatus may be implemented, by using software, hardware, or a combination thereof, as a cloud platform or a part or all of an electronic device having a model training function. Refer to FIG. 15. The apparatus includes a providing module 1501, an obtaining module 1502, a determining module 1503, and a training module 1504.

The providing module 1501 is configured to provide a parameter configuration user interface, where the parameter configuration user interface indicates a user to input a parameter count and a type of a to-be-trained target network model. For a detailed implementation process, refer to corresponding content in the foregoing embodiments. Details are not described herein again.

The obtaining module 1502 is configured to obtain the parameter count and the type of the target network model from the parameter configuration user interface. For a detailed implementation process, refer to corresponding content in the foregoing embodiments. Details are not described herein again.

The determining module 1503 is configured to determine training configuration information of the target network model based on the parameter count and the type of the target network model, where a training process of the target network model is divided into a plurality of training phases, different training phases correspond to different model parameter counts, the model parameter counts of the plurality of training phases increase sequentially with the order of training, and the training configuration information includes configuration information of the plurality of training phases. For a detailed implementation process, refer to corresponding content in the foregoing embodiments. Details are not described herein again.

The training module 1504 is configured to train the target network model based on the configuration information of the plurality of training phases. For a detailed implementation process, refer to corresponding content in the foregoing embodiments. Details are not described herein again.

Optionally, the determining module 1503 is specifically configured to:
input the parameter count and the type of the target network model into a training prediction model, to obtain first training configuration information output by the training prediction model; and
determine the training configuration information of the target network model based on the first training configuration information.

Optionally, the determining module 1503 is specifically configured to:
provide a configuration preview user interface, where the configuration preview user interface includes the first training configuration information;
modify the first training configuration information in response to an operation of modifying the first training configuration information by the user, to obtain second training configuration information; and
determine the training configuration information of the target network model based on the second training configuration information.

Optionally, the configuration information of the plurality of training phases includes model planning information, training planning information, and data planning information that correspond to each of the plurality of training phases.

The model planning information indicates a model structure of a corresponding training phase, the training planning information indicates a training configuration parameter of the corresponding training phase, and the data planning information indicates configuration of training data of the corresponding training phase.

Optionally, when the type of the target network model indicates that the target network model includes a self-attention network, the model planning information includes a quantity of self-attention networks in a network model of the corresponding training phase, a dimension of a hidden layer in each self-attention network, and a quantity of attention heads.

Optionally, the model planning information further includes a model parameter count of the corresponding training phase.

Optionally, the training planning information includes a model iteration quantity and a learning rate interval of the corresponding training phase, and the learning rate interval indicates a range of a step size of model parameter variation of the corresponding training phase.

Optionally, the training planning information further includes an expected loss value of the corresponding training phase, and the expected loss value indicates an expected difference between a predicted value and a real value of the network model of the corresponding training phase.

Optionally, the training planning information further includes at least one of a warm-up iteration quantity, a learning rate decay type, a parameter precision, and a batch size. The learning rate decay type indicates a way in which a step size of a model parameter varies, the parameter precision indicates a precision of the model parameter, the batch size indicates an amount of training data required in a single iteration, and the warm-up iteration quantity required for a learning rate in a 1^{st} training phase of the plurality of training phases changes from zero to a maximum learning rate, where the maximum learning rate is a largest value within a learning rate interval of the 1^{st} training phase.

Optionally, the data planning information includes a proportion of a training data set of the corresponding training phase in a total training data set, and the total training data set is a sum of training data sets of the plurality of training phases.

Optionally, the data planning information further includes at least one of configuration information of pruning and configuration information of distillation preheating, the pruning is used to filter the training data set of the corresponding training phase to reduce redundant information, and the distillation preheating is used to determine an initial value of a model parameter of the 1^{st} training phase of the plurality of training phases.

Optionally, the training module 1504 is specifically configured to:
set i=1, and determine an i^{th} network model based on configuration information of an i^{th} training phase of the plurality of training phases;
train the i^{th} network model based on the configuration information of the i^{th} training phase, to obtain a trained i^{th} network model;
determine a training evaluation result of the trained i^{th} network model;
provide a training evaluation user interface, where the training evaluation user interface includes the training evaluation result of the trained i^{th} network model, and the training evaluation user interface further indicates the user to determine whether training of the trained i^{th} network model is completed; and
if a training completion operation triggered by the user and that the i^{th} training phase is not a last training phase of the plurality of training phases are detected, set i=i+1, and return to the step of determining the i^{th} submodel based on the configuration information of the i^{th} training phase of the plurality of training phases; or
if a training completion operation triggered by the user and that the i^{th} training phase is a last training phase of the plurality of training phases are detected, use the trained i^{th} network model as the trained target network model.

Optionally, the training module 1504 is specifically configured to:
if the i^{th} training phase is a 1^{st} training phase of the plurality of training phases, generate the i^{th} network model based on the configuration information of the i^{th} training phase; or
if the i^{th} training phase is not a first training phase, expand a trained (i-1)^{th} network model based on the configuration information of the i^{th} training phase, to obtain the i^{th} network model.

Optionally, the configuration information of the i^{th} training phase includes model planning information of the i^{th} training phase.

The training module 1504 is specifically configured to:
provide a parameter expansion user interface, where the parameter expansion user interface indicates the user to select a parameter expansion policy, and the parameter expansion policy is used to determine an initial value of a parameter newly added to the i^{th} network model relative to the (i-1)^{th} network model;
obtain the parameter expansion policy from the parameter expansion user interface; and
perform parameter expansion on the (i-1)^{th} network model based on the parameter expansion policy and the model planning information of the i^{th} training phase, to obtain the i^{th} network model.

Optionally, the training module 1504 is specifically configured to:
determine a loss curve of the i^{th} network model, where the loss curve indicates variations of a loss value with a model iteration quantity, and the loss value indicates a difference between a predicted value and a real value of the network model;
input at least one test data set into the trained i^{th} network model, to obtain an inference result that is of the at least one test data set and that is output by the trained i^{th} network model; and
determine the training evaluation result of the trained i^{th} network model based on the loss curve and the inference result of the at least one test data set.

Optionally, the training module 1504 is specifically configured to:
optimize, based on at least one of the loss curve and the inference result of the at least one test data set, configuration information of at least one training phase that follows the i^{th} training phase among the plurality of training phases.

Optionally, the training module 1504 is specifically configured to:
modify the training evaluation result in response to an operation of modifying the training evaluation result by the user, to obtain a modified training evaluation result; and
optimizing, based on at least one of the loss curve and the inference result of the at least one test data set, the configuration information of the at least one training phase that follows the i^{th} training phase among the plurality of training phases includes:
   optimizing, based on the training evaluation result before the modification, the modified training evaluation result, and at least one of the loss curve and the inference result of the at least one test data set, the configuration information of at least one training phase that follows the i^{th} training phase among the plurality of training phases.

Optionally, the apparatus further includes:
a forgetting evaluation module, configured to perform forgetting evaluation on the trained i^{th} network model to obtain a forgetting evaluation result, where the forgetting evaluation result indicates inference performance of the trained i^{th} network model on a training data set of a historical training phase, and the historical training phase is a training phase preceding the i^{th} training phase among the plurality of training phases; and
the training module 1504 is specifically configured to:
   if it is determined, based on the forgetting evaluation result, that an inference accuracy rate of at least one historical training phase is not greater than an accuracy rate threshold, optimize, based on the training evaluation result before the modification, the modified training evaluation result, the forgetting evaluation result, and at least one of the loss curve and the inference result of the at least one test data set, the configuration information of the at least one training phase that follows the i^{th} training phase among the plurality of training phases.

In this embodiment of this application, the user can input the parameter count and the type of the target network model on the parameter configuration user interface, to determine the training configuration information of the target network model based on the parameter count and the type of the target network model. In this way, corresponding training configuration information can be determined, in a targeted manner, for network models that are with different parameter quantities and that are of different types, so that the parameter count of the model and the type of the model are more adaptive to the determined training configuration information. In addition, in this embodiment of this application, a training process of a network model with a large parameter count can be further divided into a plurality of phases, and model parameter counts of the plurality of training phases increase sequentially in a training sequence. In this way, fine-grained phase-wise control on the network model training can be implemented. In addition, because the parameter count of the network model gradually increases with the training phase, a convergence speed of the network model can be effectively accelerated, a computation amount required for the network model training can be reduced, and training costs of the network model can be reduced.

The training evaluation result in this embodiment of this application further includes a prediction performed by the cloud platform on whether the training of the trained i^{th} network model is completed. In this way, reliable training completion prediction information can be provided for a user without training experience, and training efficiency of the network model can be improved. When the training evaluation user interface further includes the loss curve of the i^{th} network model and/or an inference accuracy rate corresponding to each of the at least one test data set, a training evaluation result of a network model obtained in each training phase can be presented to the user in real time through the training evaluation user interface. In this way, the user can control a training effect of each training phase, so that the user discovers a possible existing problem in a training process in a timely manner, and the network model training efficiency is improved. During actual application, the training evaluation result determined by the cloud platform may not meet an expectation of the user. In this case, the user can modify the training evaluation result. In this way, the cloud platform can adjust configuration information of a subsequent training phase in a timely manner based on interaction between the user and the cloud platform, a loss curve, and an inference result of a test data set, so that a finally trained network model better meets the expectation of the user.

It should be noted that, during the network model training performed by the network model training apparatus provided in the foregoing embodiment, division into the foregoing functional modules is merely used as an example for description. During actual application, the foregoing functions may be allocated to different functional modules and implemented based on a requirement. To be specific, an internal structure of the apparatus is divided into different functional modules to implement all or some of the functions described above. In addition, the network model training apparatus provided in the foregoing embodiment and the embodiment of the network model training method belong to a same concept. For a specific implementation process of the network model training apparatus, refer to the method embodiment for details. Details are not described herein again.

The providing module, the obtaining module, the determining module, and the training module in the network model training apparatus shown in FIG. 15 may be implemented by software, or may be implemented by hardware, or may be implemented by a combination of software and hardware. The following uses the providing module in the network model training apparatus as an example to describe an implementation of the providing module. Similarly, for an implementation of the foregoing another module, refer to the implementation of the providing module.

A module is used as an example of a software functional unit, and the providing module may include code run on a computing instance. The computing instance may include at least one of a physical host, a virtual machine, and a container. Further, there may be one or more computing instances. For example, the providing module may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts, virtual machines, and containers configured to run the code may be distributed in a same VPC or may be distributed in a plurality of virtual private clouds (virtual private clouds, VPCs). Usually, one VPC is disposed in one region. A communication gateway needs to be disposed in each VPC for communication between two VPCs in a same region and cross-region communication between VPCs in different regions. The VPCs are interconnected through the communication gateway.

A module is used as an example of a hardware functional unit, and the providing module may include at least one computing device, for example, a server. Alternatively, the providing module may be a device implemented by an application-specific integrated circuit (application-specific integrated circuit, ASIC) or a programmable logic device (programmable logic device, PLD), or the like. The PLD may be implemented by a complex programmable logical device (complex programmable logical device, CPLD), a field-programmable gate array (field-programmable gate array, FPGA), a generic array logic (generic array logic, GAL), or any combination thereof.

A plurality of computing devices included in the providing module may be distributed in a same region, or may be distributed in different regions. The plurality of computing devices included in the providing module may be distributed in a same AZ, or may be distributed in different AZs. Similarly, the plurality of computing devices included in the providing module may be distributed on a same VPC, or may be distributed on a plurality of VPCs. The plurality of computing devices may be any combination of computing devices such as a server, an ASIC, a PLD, a CPLD, an FPGA, and GAL.

In another embodiment, the providing module in the network model training apparatus may be configured to perform any step in the network model training method, the obtaining module in the network model training apparatus may be configured to perform any step in the network model training method, the determining module in the network model training apparatus may be configured to perform any step in the network model training method, and the training module in the network model training apparatus may be configured to perform any step in the network model training method. Steps that are implemented by the providing module, the obtaining module, the determining module, and the training module in the network model training apparatus may be specified as required. The providing module, the obtaining module, the determining module, and the training module in the network model training apparatus respectively implement different steps in the network model training method, to implement all functions of the network model training apparatus.

An embodiment of this application further provides a computing device 100. As shown in FIG. 16, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that quantities of processors and memories in the computing device 100 are not limited in this application.

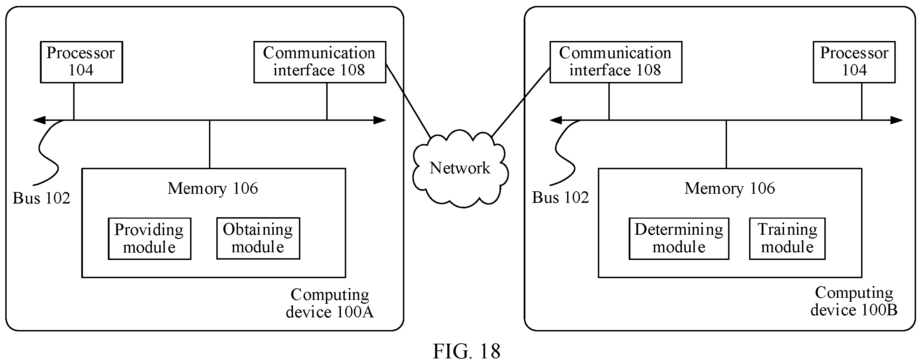

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used in FIG. 18 for representation, but it does not mean that there is only one bus or only one type of bus. The bus 102 may include a path for transmitting information between components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a microprocessor (microprocessor, MP), a digital signal processor (digital signal processor, DSP), and an integrated circuit. The integrated circuit is, for example, an ASIC, a PLD, or a combination thereof. Optionally, the PLD is a CPLD, an FPGA, GAL, or any combination thereof.

The memory 106 may include a volatile memory (volatile memory), for example, a random access memory (random access memory, RAM). The memory 106 may further include a non-volatile memory (non-volatile memory), for example, a read-only memory (read-only memory, ROM), a flash memory, a hard disk drive (hard disk drive, HDD), or a solid-state drive (solid-state drive, SSD), or any other medium that can be configured to carry or store expected program code in a form of an instruction or a data structure and that can be accessed by a computer, but is not limited thereto. The memory 106 exists independently, and is connected to the processor 104 through the bus 102, or the memory 106 is integrated with the processor 104.

The memory 106 stores executable program code, and the processor 104 executes the executable program code to implement the foregoing network model training method. In other words, the memory 106 stores instructions for performing the network model training method.

For example, the memory 106 stores executable code, and the processor 104 executes the executable code to implement functions of the providing module, the obtaining module, the determining module, and the training module shown in FIG. 16. In other words, the memory 106 stores instructions for performing the network model training method provided in embodiments of this application.

The communication interface 108 implements communication between the computing device 100 and another device or a communication network through a transceiver module, for example, but not limited to a network interface card or a transceiver. The network interface includes a wired communication interface, or further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

An embodiment of this application further provides a computing device cluster. The computing device cluster includes a plurality of computing devices. The computing device may be a server, for example, a central server, an edge server, or a local server in a local data center. In some embodiments, the computing device may alternatively be a terminal device such as a desktop computer, a notebook computer, or a smartphone.

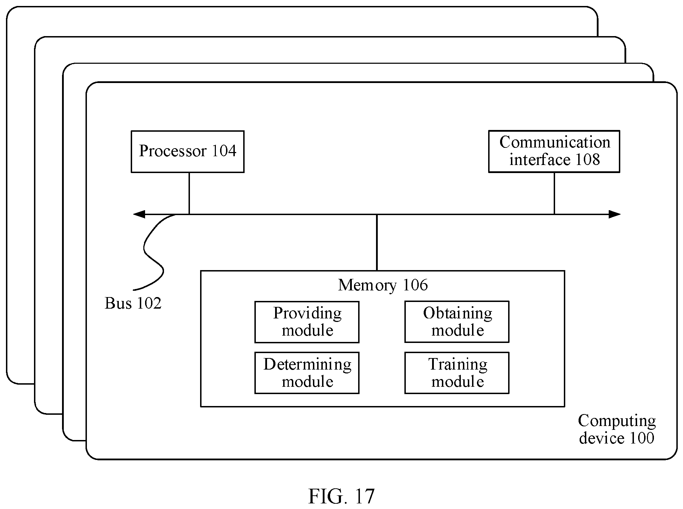

As shown in FIG. 17, the computing device cluster includes a plurality of computing devices 100. Memories 106 in the plurality of computing devices 100 in the computing device cluster may store same instructions for performing the foregoing network model training method.

In some possible implementations, the memories 106 in the plurality of computing devices 100 in the computing device cluster may alternatively separately store some instructions for performing the foregoing network model training method. In other words, a combination of the plurality of computing devices 100 may jointly execute all the instructions for performing the network model training method.

It should be noted that the memories 106 in different computing devices 100 in the computing device cluster may store different instructions, to perform some functions of the foregoing network model training method. In other words, instructions stored in the memories 106 in different computing devices 100 may implement functions of some or all modules included in the foregoing network model training apparatus.

In some possible implementations, one or more computing devices in the computing device cluster may be connected through a network. The network may be a wide area network, a local area network, or the like. FIG. 18 shows a possible implementation. As shown in FIG. 18, two computing devices 100A and 100B are connected through a network. Specifically, each computing device is connected to the network through a communication interface of the computing device. In this possible implementation, a memory 106 in the computing device 100A stores instructions for performing functions of some modules included in the foregoing network model training apparatus. In addition, a memory 106 in the computing device 100B stores instructions for performing functions of remaining modules included in the foregoing network model training apparatus.

It should be understood that functions of the computing device 100A shown in FIG. 18 may alternatively be implemented by a plurality of computing devices 100. Similarly, functions of the computing device 100B may alternatively be implemented by a plurality of computing devices 100.

An embodiment of this application further provides another computing device cluster. For a connection relationship between computing devices in the computing device cluster, refer to the similar connection manner in the computing device cluster in FIG. 17 and FIG. 18. A difference lies in that memories 106 in one or more computing devices 100 in the computing device cluster may store same instructions for performing the network model training method.

In some possible implementations, memories 106 in one or more computing devices 100 in the computing device cluster may alternatively separately store some instructions for performing network model training method. In other words, a combination of the one or more computing devices 100 may jointly execute instructions for performing the network model training method.

An embodiment of this application further provides a computer-readable storage medium. The storage medium stores instructions. When the instructions are run on a computer, the computer is caused to perform the steps of the network model training method in the foregoing embodiments, or perform the steps of the network model training method in the foregoing embodiments.

An embodiment of this application further provides a computer program product including instructions. When the instructions are run on a computer, the computer is caused to perform the steps of the network model training method in the foregoing embodiments. In other words, a computer program is provided. When the computer program is run on a computer, the computer is caused to perform the steps of the network model training method in the foregoing embodiments.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, all or some of the procedure or functions according to embodiments of this application are generated. The computer may be a generalpurpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, or a data subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like. It should be noted that the computer-readable storage medium mentioned in embodiments of this application may be a non-volatile storage medium, that is, may be a non-transitory storage medium.

It should be understood that "a plurality of" mentioned in this specification means two or more. In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and a signal in embodiments of this application are used under authorization by the user or full authorization by all parties, and collection, use, and processing of related data need to conform to related laws, regulations, and standards of related countries and regions. For example, both the parameter count and the type of the target network model in embodiments of this application are obtained under sufficient authorization.

The foregoing descriptions are merely embodiments of this application, but are not intended to limit this application. Any modification, equivalent replacement, or improvement made without departing from the spirit and principle of this application should fall within the protection scope of this application.

## Claims

1. A network model training method, wherein the method comprises:
providing a parameter configuration user interface, wherein the parameter configuration user interface indicates a user to input a parameter count and a type of a to-be-trained target network model;
obtaining the parameter count and the type of the target network model from the parameter configuration user interface;
determining training configuration information of the target network model based on the parameter count and the type of the target network model, wherein a training process of the target network model is divided into a plurality of training phases, different training phases correspond to different model parameter counts, the model parameter counts of the plurality of training phases increase sequentially with the order of training, and the training configuration information comprises configuration information of the plurality of training phases; and
training the target network model based on the configuration information of the plurality of training phases.

2. The method according to claim 1, wherein the determining the training configuration information of the target network model based on the parameter count and the type of the target network model comprises:
inputting the parameter count and the type of the target network model into a training prediction model, to obtain first training configuration information output by the training prediction model; and
determining the training configuration information of the target network model based on the first training configuration information.

3. The method according to claim 2, wherein the determining the training configuration information of the target network model based on the first training configuration information comprises:
providing a configuration preview user interface, wherein the configuration preview user interface comprises the first training configuration information;
modifying the first training configuration information in response to an operation of modifying the first training configuration information by the user, to obtain second training configuration information; and
determining the training configuration information of the target network model based on the second training configuration information.

4. The method according to any one of claims 1 to 3, wherein the configuration information of the plurality of training phases comprises model planning information, training planning information, and data planning information that correspond to each of the plurality of training phases, wherein
the model planning information indicates a model structure of a corresponding training phase, the training planning information indicates a training configuration parameter of the corresponding training phase, and the data planning information indicates configuration of training data of the corresponding training phase.

5. The method according to claim 4, wherein when the type of the target network model indicates that the target network model comprises a self-attention network, the model planning information comprises a quantity of self-attention networks in a network model of the corresponding training phase, a dimension of a hidden layer in each self-attention network, and a quantity of attention heads.

6. The method according to claim 5, wherein the model planning information further comprises a model parameter count of the corresponding training phase.

7. The method according to any one of claims 4 to 6, wherein the training planning information comprises a model iteration quantity and a learning rate interval of the corresponding training phase, and the learning rate interval indicates a range of a step size of model parameter variation of the corresponding training phase.

8. The method according to claim 7, wherein the training planning information further comprises an expected loss value of the corresponding training phase, and the expected loss value indicates an expected difference between a predicted value and a real value of the network model of the corresponding training phase.

9. The method according to claim 7 or 8, wherein the training planning information further comprises at least one of a warm-up iteration quantity, a learning rate decay type, a parameter precision, and a batch size, wherein the learning rate decay type indicates a way in which a step size of a model parameter varies, the parameter precision indicates a precision of the model parameter, the batch size indicates an amount of training data required in a single iteration, and the warm-up iteration quantity indicates a quantity of iterations required for a learning rate in a 1^{st} training phase of the plurality of training phases changes from zero to a maximum learning rate, wherein the maximum learning rate is a largest value within a learning rate interval of the 1^{st} training phase.

10. The method according to any one of claims 4 to 9, wherein the data planning information comprises a proportion of a training data set of the corresponding training phase in a total training data set, and the total training data set is a sum of training data sets of the plurality of training phases.

11. The method according to claim 10, wherein the data planning information further comprises at least one of configuration information of pruning and configuration information of distillation preheating, the pruning is used to filter the training data set of the corresponding training phase to reduce redundant information, and the distillation preheating is used to determine an initial value of a model parameter of the 1^{st} training phase of the plurality of training phases.

12. The method according to claim 1, wherein the training the target network model based on the configuration information of the plurality of training phases comprises:
setting i=1, and determining an i^{th} network model based on configuration information of an i^{th} training phase of the plurality of training phases;
training the i^{th} network model based on the configuration information of the i^{th} training phase, to obtain a trained i^{th} network model;
determining a training evaluation result of the trained i^{th} network model; and
providing a training evaluation user interface, wherein the training evaluation user interface comprises the training evaluation result of the trained i^{th} network model, and the training evaluation user interface further indicates the user to determine whether training of the trained i^{th} network model is completed; and
if a training completion operation triggered by the user and that the i^{th} training phase is not a last training phase of the plurality of training phases are detected, setting i=i+1, and returning to the step of determining the i^{th} submodel based on the configuration information of the i^{th} training phase of the plurality of training phases; or
if a training completion operation triggered by the user and that the i^{th} training phase is a last training phase of the plurality of training phases are detected, using the trained i^{th} network model as a trained target network model.

13. The method according to claim 12, wherein the determining the i^{th} network model based on the configuration information of the i^{th} training phase of the plurality of training phases comprises:
if the i^{th} training phase is a 1^{st} training phase of the plurality of training phases, generating the i^{th} network model based on the configuration information of the i^{th} training phase; or
if the i^{th} training phase is not a 1^{st} training phase, expanding a trained (i-1)^{th} network model based on the configuration information of the i^{th} training phase, to obtain the i^{th} network model.

14. The method according to claim 13, wherein the configuration information of the i^{th} training phase comprises model planning information of the i^{th} training phase; and
the expanding the trained (i-1)^{th} network model based on the configuration information of the i^{th} training phase, to obtain the i^{th} network model comprises:
providing a parameter expansion user interface, wherein the parameter expansion user interface indicates the user to select a parameter expansion policy, and the parameter expansion policy is used to determine an initial value of a parameter newly added to the i^{th} network model relative to the (i-1)^{th} network model;
obtaining the parameter expansion policy from the parameter expansion user interface; and
performing parameter expansion on the (i-1)^{th} network model based on the parameter expansion policy and the model planning information of the i^{th} training phase, to obtain the i^{th} network model.

15. The method according to claim 12, wherein the determining the training evaluation result of the trained i^{th} network model comprises:
determining a loss curve of the i^{th} network model, wherein the loss curve indicates variations of a loss value with a model iteration quantity, and the loss value indicates a difference between a predicted value and a real value of the network model;
inputting at least one test data set into the trained i^{th} network model, to obtain an inference result that is of the at least one test data set and that is output by the trained i^{th} network model; and
determining the training evaluation result of the trained i^{th} network model based on the loss curve and the inference result of the at least one test data set.

16. The method according to claim 15, wherein after the training completion operation triggered by the user and that the i^{th} training phase is not the last training phase of the plurality of training phases are detected, the method further comprises:
optimizing, based on at least one of the loss curve and the inference result of the at least one test data set, configuration information of at least one training phase that follows the i^{th} training phase among the plurality of training phases.

17. The method according to claim 16, wherein after the providing the training evaluation user interface, the method further comprises:
modifying the training evaluation result in response to an operation of modifying the training evaluation result by the user, to obtain a modified training evaluation result; and
the optimizing, based on at least one of the loss curve and the inference result of the at least one test data set, the configuration information of the at least one training phase that follows the i^{th} training phase among the plurality of training phases comprises:
optimizing, based on the training evaluation result before the modification, the modified training evaluation result, and at least one of the loss curve and the inference result of the at least one test data set, the configuration information of the at least one training phase that follows the i^{th} training phase among the plurality of training phases.

18. The method according to claim 17, wherein the method further comprises:
performing forgetting evaluation on the trained i^{th} network model to obtain a forgetting evaluation result, wherein the forgetting evaluation result indicates inference performance of the trained i^{th} network model on a training data set of a historical training phase, and the historical training phase is a training phase preceding the i^{th} training phase among the plurality of training phases; and
the optimizing, based on the training evaluation result before the modification, the modified training evaluation result, and at least one of the loss curve and the inference result of the at least one test data set, the configuration information of the at least one training phase that follows the i^{th} training phase among the plurality of training phases comprises:
if it is determined, based on the forgetting evaluation result, that an inference accuracy rate of at least one historical training phase is not greater than an accuracy rate threshold, optimizing, based on the training evaluation result before the modification, the modified training evaluation result, the forgetting evaluation result, and at least one of the loss curve and the inference result of the at least one test data set, the configuration information of the at least one training phase that follows the i^{th} training phase among the plurality of training phases.

19. A network model training apparatus, wherein the apparatus comprises:
a providing module, configured to provide a parameter configuration user interface, wherein the parameter configuration user interface indicates a user to input a parameter count and a type of a to-be-trained target network model;
an obtaining module, configured to obtain the parameter count and the type of the target network model from the parameter configuration user interface;
a determining module, configured to determine training configuration information of the target network model based on the parameter count and the type of the target network model, wherein a training process of the target network model is divided into a plurality of training phases, different training phases correspond to different model parameter counts, the model parameter counts of the plurality of training phases increase sequentially with the order of training, and the training configuration information comprises configuration information of the plurality of training phases; and
a training module, configured to train the target network model based on the configuration information of the plurality of training phases.

20. A computing device cluster, wherein the computing device cluster comprises at least one computing device, and each computing device comprises a processor and a memory; and
the processor of the at least one computing device is configured to execute instructions stored in the memory of the at least one computing device, to cause the computing device cluster to perform the method according to any one of claims 1 to 18.

21. A computer-readable storage medium, wherein the storage medium comprises computer program instructions; and when the computer program instructions are executed by a computing device cluster, the computing device cluster performs the method according to any one of claims 1 to 18.

22. A computer program product comprising instructions, wherein when the instructions are run by a computing device cluster, the computing device cluster is caused to perform the method according to any one of claims 1 to 18.
